# EUROPÄISCHE PATENTSCHRIFT

(11) **EP 1 711 385 B1**
(45) Veröffentlichungstag und Bekanntmachung des Hinweises auf die Patenterteilung: **09.12.2009**
(21) Anmeldenummer: 05715198.7
(22) Anmeldetag: 20.01.2005
(51) Int. Cl.: B60T 8/40, B60T 13/57, B60T 13/72, B60T 7/04

(54) **BREMSKRAFTERZEUGER FÜR EINE HYDRAULISCHE FAHRZEUGBREMSANLAGE**
BRAKING FORCE GENERATOR FOR A HYDRAULIC VEHICLE BRAKING SYSTEM
GENERATEUR DE FORCE DE FREINAGE POUR UN SYSTEME DE FREINAGE HYDRAULIQUE DE VEHICULE

(30) Priorität: 02.02.2004 DE 102004005107; 23.06.2004 DE 20409835 U
(43) Veröffentlichungstag der Anmeldung: 18.10.2006
(73) Patentinhaber: Lucas Automotive GmbH, 56070 Koblenz (DE)
(72) Erfinder: SCHLÜTER, Peter, 56206 Kammerforst (DE)
(74) Vertreter: Thum, Bernhard
(86) Internationale Anmeldenummer: PCT/EP2005/000538
(87) Internationale Veröffentlichungsnummer: WO 2005/073045

(56) Entgegenhaltungen:
- WO-A-2004/005095
- DE-A1- 4 116 372
- GB-A- 2 193 546

## Beschreibung

Die vorliegende Erfindung betrifft einen Bremskrafterzeuger mit einem Krafteingangsglied, das mit einem Bremspedal koppelbar oder gekoppelt und in einem Basisgehäuse des Bremskrafterzeugers verlagerbar ist, einem Hauptbremszylinder, in dem ein Primärkolben verlagerbar geführt ist, wobei der Primärkolben mit dem Hauptbremszylinder eine Primärdruckkammer zur Erzeugung eines hydraulischen Bremsdrucks begrenzt, einer mit dem Krafteingangsglied koppelbaren Pedalgegenkraft-Simulationseinrichtung, einer Pedalbetätigungs-Erfassungseinrichtung zum Erfassen einer Pedalbetätigung und einer Betätigungskraft-Erzeugungseinrichtung zum Erzeugen einer auf den Primärkolben wirkenden Betätigungskraft.

Bei den heute üblichen Bremssystemen wird der zur Beaufschlagung der Radbremse am Fahrzeug notwendige hydraulische Bremsdruck überwiegend mittels eines Hauptbremszylinders erzeugt. Hierzu ist die Einleitung einer Betätigungskraft auf den genannten Hauptbremszylinder notwendig, welche in Reaktion auf eine Betätigung des Bremspedals durch den Fahrzeugführer erzeugt wird. Zur Verbesserung des Betätigungskomforts wird üblicherweise die eigentliche Bremspedalkraft mittels eines Bremskraftverstärkers um einen vorbestimmten Prozentsatz angehoben, so dass die notwendigen Bremspedalbetätigungskräfte für eine gewünschte Fahrzeugverzögerung derart klein gehalten werden können, dass es jedem Fahrer ohne Anstrengung möglich ist, das Fahrzeug adäquat abzubremsen. Ein derartiges Bremssystem mit Bremskraftverstärker ist beispielsweise aus der DE 44 05 092 bekannt. WO 2004/005095 offenbart ein Bremskraft erzeuger mit dem Merkmalen des Oberbegriffs des Anspruchs 1.

Nachteilig wirkt sich bei diesen Bremssystemen aus, dass der Fahrer durch seine Betätigungsaktion am Bremspedal in jedem Fall den hydraulischen Druck an den Radbremsen beeinflusst. Solange dies die Bremssituation unterstützt, ist dies unproblematisch. Sobald der Fahrer aber bezogen auf die tatsächliche Bremssituation falsch reagiert, indem er beispielsweise zu viel oder zu wenig Bremsdruck einsteuert, kann das Bremsverhalten, insbesondere der Bremsweg sowie die Spurtreue, des Fahrzeugs verschlechtert werden, was im schlimmsten Fall zu einem Unfall führen kann.

Moderne Fahrzeugregelsysteme (ABS, ESP, TC etc.) sind heutzutage in der Lage die optimale, notwendige Bremsleistung in den physikalische Grenzen anhand des momentanen Fahrzustands des Fahrzeugs zu ermitteln und somit eine Bremsung zu optimieren. Basis hierfür ist es allerdings, dass der oben genannte direkte Einfluss des Fahrers auf den Bremsdruck verhindert wird. Ferner wird es inzwischen auch als unkomfortabel angesehen, dass der Fahrer am Bremspedal die Wirkung des Fahrzeugregelsystems spürt, wie beispielsweise bei Aktivierung des ABS ein wiederholtes Rütteln am Bremspedal.

Um diesen mit Fahrzeugregelsystemen verbundenen Anforderungen Rechnung zu tragen, wird bei modernen Bremssystemen bereits das Bremspedal von der Bremskrafterzeugung entkoppelt, wobei dann die Bremspedalbetätigung nur noch zur Ermittlung des Verzögerungswunsches des Fahrers dient. Die eigentliche Bremskrafterzeugung, beispielsweise zur Betätigung des Hauptbremszylinders, erfolgt dann durch einen separaten Bremskrafterzeuger und zwar nur noch basierend auf Steuerungsdaten eines elektronischen Steuergeräts. Hierdurch kann vorab überprüft werden, ob beispielsweise die gewünschte Fahrzeugverzögerung nicht die, durch die Fahrzeugregelsysteme (ABS, ESP, TC etc.) ermittelten, momentan gültigen physikalischen Grenzen hinsichtlich Bremsweg und Spurtreue überschreiten würde. Gleichzeitig kann natürlich auch eine vom Fahrer zu gering eingesteuerte Verzögerung zur Minimierung des Anhalteweges in Notsituationen vom Steuergerät durch Einsteuerung eines höheren Bremsdrucks ausgeglichen werden. Ein derartiges System ist beispielsweise in dem gattungsbildenden Stand der Technik gemäß der EP 1 070 006 beschrieben. Es hat sich jedoch gezeigt, dass derartige Bremssysteme verhältnismäßig kostenintensiv in der Herstellung sind und einen erheblichen gerätetechnischen Aufwand erfordern, um auch dann einen zuverlässigen Bremsbetrieb gewährleisten zu können, wenn die Mittel zu Bremskrafterzeugung einmal ausfallen sollten.

Es ist demgegenüber eine Aufgabe der vorliegenden Erfindung, einen Bremskrafterzeuger der eingangs bezeichneten Art bereitzustellen, welcher bei verhältnismäßig einfachem und kostengünstigem Aufbau eine hohe Zuverlässigkeit aufweist und auch bei Ausfall einzelner Komponenten eine zuverlässige Bremswirkung garantiert.

Diese Aufgabe wird durch einen Bremskrafterzeuger nach Anspruch 1 gelöst, bei welchem weiter vorgesehen ist, dass die Betätigungskraft-Erzeugungseinrichtung ein Steuerventil, eine Kammeranordnung und einen elektromagnetischen Aktuator aufweist, wobei die Kammeranordnung mit einer Unterdruckkammer und einer von der Unterdruckkammer durch eine bewegliche Wand getrennten und über das Steuerventil miteinander fluidisch verbindbaren Arbeitskammer ausgebildet ist und wobei das Steuerventil nach Maßgabe der erfassten Pedalbetätigung durch den elektromagnetischen Aktuator zum Erzielen einer die Betätigungskraft bestimmenden Druckdifferenz zwischen der Arbeitskammer und der Unterdruckkammer ansteuerbar ist. wobei die Pedalgegenkraft - simulationseinrichtung über ein Pedalgegenkraft-Hydrauliksystem, das eine Dämpferanordnung aufweist, mit dem Krafteingangsglied Kraftübertragend koppelbar ist, wobei die Dämpferanordnung in dem Zylindergehäuse integriert oder als separate Baugruppe an diesem angebracht ist.

Mit dem Bremskrafterzeuger gemäß der vorliegenden Erfindung wird demnach in einer Normalbetriebssituation die über das Krafteingangsglied von einem Fahrer des Fahrzeugs vorgegebene Intensität der Bremspedalbetätigung erfasst und ohne Ausnutzung der von dem Fahrer auf das Bremspedal ausgeübten Pedalbetätigungskraft allein mittels der Betätigungskraft-Erzeugungseinrichtung eine Betätigungskraft auf den Primärkolben ausgeübt. Ähnlich wie bei dem eingangs erwähnten Stand der Technik gemäß der EP 1070 006 wird erfindungsgemäß die auf den Primärkolben ausgeübte Betätigungskraft im Normalbetriebsfall mechanisch entkoppelt von der auf das Krafteingangsglied ausgeübten Pedalbetätigungskraft erzeugt. Allerdings ist die hierfür im Rahmen der Erfindung eingesetzte Betätigungskraft-Erzeugungseinrichtung nicht als separates hydraulisches System ausgebildet, was zu einem erheblichen technischen Mehraufwand und neben den damit verbundenen Mehrkosten auch zu einer erhöhten Fehleranfälligkeit führen würde. Vielmehr ist der erfindungsgemäße Bremskrafterzeuger mittels einer Kammeranordnung realisiert, wie sie auch in herkömmlichen pneumatischen Bremskraftverstärkern zur mechanischen Unterstützung der Pedalbetätigungskraft zum Einsatz kommt. Die Anmelderin hat erkannt, dass sich das technisch ausgereifte und kostengünstig verfügbare Prinzip eines pneumatischen Bremskraftverstärkers auch zu einer von der Pedalbetätigung vollständig entkoppelten Betätigungskrafterzeugung nutzen lässt. Hierzu wird nach Maßgabe der Intensität der Bremspedalbetätigung die Kammeranordnung über das Steuerventil angesteuert, um dadurch zur Erzeugung einer auf den Primärkolben wirkenden Betätigungskraft nach Maßgabe des mit der Pedalbetätigung zum Ausdruck gebrachten Fahrerwunsches eine Druckdifferenz zwischen der Unterdruckkammer und der Arbeitskammer einzustellen. Diese Druckdifferenz führt in der Folge zu einer Verlagerung der beweglichen Wand und daraus resultierend zu einer Verlagerung des Primärkolbens.

Um die Funktionsweise des erfindungsgemäßen Bremskrafterzeugers überwachen zu können und um einen Parameter zur Rückkopplung des Ansprechverhaltens des erfindungsgemäßen Bremskrafterzeugers im Rahmen einer Regelschleife bereitstellen zu können, sieht eine Weiterbildung der Erfindung vor, dass die gegenwärtige Lage der beweglichen Wand mittels eines Positionssensors erfasst wird. Dabei kann der Positionssensor induktiv oder mechanisch ausgebildet sein. Eine einfache, kostengünstige und dennoch zuverlässige Ausgestaltung ergibt sich beispielsweise dann, wenn der Positionssensor mit einem Taststift ausgebildet ist, der unter Vorspannung an der beweglichen Wand anliegt und deren Position bei einer Verlagerung erfassen kann.

Hinsichtlich der Pedalbetätigungs-Erfassungseinrichtung kann vorgesehen sein, dass diese einen Sensor zur Erfassung einer aktuellen Auslenkung des Bremspedals, insbesondere einen an einer Drehachse des Bremspedals angeordneten Drehwinkelsensor aufweist. Es ist aber gleichermaßen möglich, die Pedalbetätigung mittels eines andersartig ausgebildeten Sensors zu erfassen, beispielsweise anhand der translatorischen Bewegung des Krafteingangsglieds oder anhand einer innerhalb des Krafteingangsglieds auftretenden Druckbelastung.

Wie bereits aus herkömmlichen pneumatischen Bremskraftverstärkern bekannt, kann bei dem erfindungsgemäßen Bremskrafterzeuger vorgesehen sein, dass die Unterdruckkammer zur Erzeugung eines Unterdrucks mit dem Ansaugtrakt eines Verbrennungsmotors oder mit einer Vakuumpumpe fluidisch verbunden ist.

Wie vorstehend bereits ausgeführt, wird im Unterschied zu herkömmlichen Bremskraftverstärkern die Pedalbetätigungskraft bei der erfindungsgemäßen Lösung im Normalbremsfall, das heißt bei voller Funktionsfähigkeit des Bremssystems, nicht an den Primärkolben weitergeleitet. Vielmehr ist es erforderlich, mittels des elektromagnetischen Aktuators eine Betätigungskraft zu erzeugen. So kann der Aktuator in Form eines Linearantriebs oder eines rotatorischen Antriebs ausgeführt sein, dessen Rotationsbewegung über eine Getriebeanordnung, beispielsweise einen Kugelgewindetrieb, in eine translatorische Bewegung umgewandelt wird. Eine bevorzugte Ausführungsform der Erfindung sieht vor, dass der elektromagnetische Aktuator eine an dem Steuerventilgehäuse festgelegte Spule und einen vermittels der Spule relativ zu dieser verlagerbaren magnetischen Anker aufweist. Mit dieser Ausführungsvariante lässt sich ein kostengünstiger, zuverlässig und reibungsarm arbeitender und exakt positionierbarer Bremskrafterzeuger erzielen.

Eine zentrale Komponente des erfindungsgemäßen Bremskrafterzeugers stellt das Steuerventil dar. Dieses kann erfindungsgemäß derart ausgebildet sein, dass es ein relativ zu dem Basisgehäuse verlagerbares Steuerventilgehäuse und ein relativ zu dem Steuerventilgehäuse verlagerbares Steuerventilelement aufweist, wobei an dem Steuerventilgehäuse ein in dichtende Anlage mit dem Steuerventilelement bringbarer Gehäusedichtsitz vorgesehen ist, wobei weiter mit dem elektromagnetischen Aktuator, insbesondere mit dessen Anker, eine Steuerventilhülse gekoppelt ist, an der ein in dichtende Anlage mit dem Steuerventilelement bringbarer Hülsendichtsitz vorgesehen ist. Im Betrieb kann bei einer derartigen Anordnung vorgesehen sein, dass bei dichtem Anliegen von Steuerventilelement und Hülsendichtsitz und gleichzeitig voneinander getrenntem Steuerventilelement und Gehäusedichtsitz die Arbeitskammer mit der Unterdruckkammer fluidisch verbunden ist und dass bei dichtem Anliegen von Steuerventilelement und Gehäusedichtsitz und bei gleichzeitig voneinander getrenntem Steuerventilelement und Hülsendichtsitz zum Aufbau eines Differenzdrucks zwischen der Arbeitskammer und der Unterdruckkammer die Arbeitskammer von der Unterdruckkammer getrennt und mit der Umgebungsatmosphäre fluidisch verbunden ist. Bei einer derartigen Auslegung des Steuerventils geht man zunächst von der herkömmlichen Ausgestaltung eines im Rahmen von pneumatischen Bremskraftverstärkern eingesetzten Steuerventils aus und passt dessen Funktionsweise an die erfindungsgemäße Lösung an. Insbesondere wird die Steuerventilhülse und damit der Hülsendichtsitz nicht etwa über das Krafteingangsglied, sondern über den elektromagnetischen Aktuator von dem Steuerventilelement abgehoben und somit die Voraussetzung für den Aufbau einer Druckdifferenz zwischen der Unterdruckkammer und der Arbeitskammer geschaffen. In der Folge bildet sich in der Arbeitskammer ein Überdruck gegenüber der Unterdruckkammer aus, was zu einer Verlagerung der beweglichen Wand in der Kammeranordnung und mit dieser zu einer Verlagerung des Steuerventilgehäuses führt. Schließlich kommt auch der Hülsendichtsitz wieder in Anlage mit dem Steuerventilelement, so dass sich ein Gleichgewichtszustand einstellt, in welchem die aktuelle Betätigungskraft aufrechterhalten wird. Bei einer weiteren Verlagerung des elektromagnetischen Aktuators, insbesondere des Ankers kommt es zu einer entsprechenden Anpassung der Druckdifferenz und damit nach einer Verlagerung des Steuerventilgehäuses zu einer entsprechenden Anpassung der auf den Primärkolben wirkenden Betätigungskraft. Reduziert der Fahrer die Pedalbetätigung bis er schließlich das Bremspedal vollständig freigibt, so reagiert der elektromagnetische Aktuator entsprechend, indem der Anker in die Ausgangslage zurückbewegt wird, was schließlich dazu führt, dass sich der Gehäusedichtsitz von dem Steuerventilelement abhebt. Dadurch kann ein erneuter Druckausgleich zwischen der Arbeitskammer und der Unterdruckkammer erfolgen, bis schließlich annähernd Druckgleichheit herrscht. Dabei bewegt sich das Steuerventilgehäuse ebenfalls in seine Ausgangsstellung zurück, so dass die Betätigungskraft schließlich wieder auf Null reduziert wird.

Um sicherzustellen, dass im Normalbetriebsfall, das heißt bei voller Funktionsfähigkeit aller Komponenten des Systems keine mechanische Kopplung zwischen dem Krafteingangsglied oder einer mit diesem verbundenen Komponente stattfindet und um dennoch für den Fall, dass eine der Komponenten ausfällt, einen Notbetriebsmodus gewährleisten können, in dem der Fahrer des Fahrzeugs dieses noch hinreichend abbremsen kann, sind bei einer Ausführungsform der Erfindung die folgenden Vorkehrungen getroffen. Insbesondere sieht diese Ausführungsform vor, dass zwischen dem Krafteingangsglied und einer das Steuerventil betätigenden Komponente, insbesondere dem Anker, ein Sicherheitsspiel vorgesehen ist, das bei ausbleibender Verlagerung des Ankers durch die Spule trotz Betätigung des Bremspedals überwunden wird, so dass die das Steuerventil betätigende Komponente, insbesondere der Anker, mit dem Krafteingangsglied kraftübertragend koppelbar ist, wobei eine durch eine Bremspedalbetätigung induzierte weitere Verlagerung des Krafteingangsglieds unmittelbar auf die das Steuerventil betätigende Komponente, insbesondere den Anker, und in der Folge auf das Steuerventilgehäuse übertragen wird. Das Sicherheitsspiel ist derart bemessen, dass es im Normalbetriebsfall, das heißt dann, wenn der elektromagnetische Aktuator in Antwort auf eine erfasste Pedalbetätigung in vorgesehener Weise reagiert, nie überwunden wird und somit das Krafteingangsglied oder eine mit diesem verbundene Komponente auch nicht in mechanischen Kontakt mit dem Anker oder einer Komponente des Steuerventilgehäuses gelangt.

In einer Betriebssituation, in der die elektrische Ansteuerung des elektromagnetischen Aktuators nicht korrekt arbeitet, beispielsweise weil die Pedalbetätigungs-Erfassungseinrichtung ausgefallen ist, verharrt der elektromagnetische Aktuator, insbesondere der Anker, trotz einer Betätigung des Bremspedals durch den Fahrer in seiner Ausgangsstellung. In der Folge nähert sich das Krafteingangsglied oder die mit diesem verbundene Komponente dem Anker mehr und mehr an, ohne dass es zu einer Bremswirkung kommt. Bei weiterem Niedertreten des Bremspedals wird schließlich das Sicherheitsspiel aufgebraucht. Das Krafteingangsglied oder die mit diesem gekoppelte Komponente kommt in mechanischen und kraftübertragenden Kontakt mit dem elektromagnetischen Aktuator, insbesondere mit dem Anker, und verlagert diesen. Dadurch wird auch die Ventilhülse verlagert, so dass sich der Hülsendichtsitz von dem Steuerventilelement abhebt. Dies führt jedoch - wie vorstehend bereits ausgeführt - zu einem Aufbau einer Druckdifferenz zwischen der Unterdruckkammer und der Arbeitskammer, was in der Erzeugung einer Betätigungskraft resultiert. Der erfindungsgemäße Bremskrafterzeuger arbeitet demnach bei nicht ordnungsgemäß funktionierendem elektromagnetischem Aktuator nach Überwindung des Sicherheitsspiels wie ein herkömmlicher Bremskraftverstärker.

Selbst in einer Betriebssituation, in der auch die Unterdruckquelle, beispielsweise eine gesondert ausgebildete Vakuumpumpe, ausfällt, kann mit dem erfindungsgemäßen Bremskrafterzeuger noch eine hinreichend große Bremskraft zum Abbremsen des Fahrzeugs erzeugt werden. In diesem Fall bleibt die Kammeranordnung wirkungslos. Allerdings ist die erfindungsgemäße Anordnung derart ausgebildet, dass das Krafteingangsglied nach Überwindung eines weiteren Sicherheitsspiels schließlich mechanisch mit dem Primärzylinder in Kontakt tritt, so dass sich die auf das Krafteingangsglied ausgeübte Pedalbetätigungskraft nach Überwindung der Sicherheitsspiele unmittelbar auf den Primärkolben übertragen lässt, um somit eine Bremsung einzuleiten. Sodann kann die von dem Fahrer auf das Krafteingangsglied ausgeübte Betätigungskraft direkt auf den Primärzylinder übertragen werden.

Wie vorstehend bereits dargelegt, besteht ein grundlegender Gedanke der Erfindung darin, im Normalbetriebsfall bei voller Funktionsfähigkeit sämtlicher Komponenten des Bremssystems, bei jeder Bremsung eine auf den Primärkolben wirkende Betätigungskraft entkoppelt von einer Pedalbetätigungskraft zu erzeugen. Um bei kompakter Ausbildung des erfindungsgemäßen Bremskrafterzeuger auch verhältnismäßig hohe Betätigungskräfte erzeugen zu können, sieht eine Weiterbildung der Erfindung vor, dass die Kammeranordnung als Tandem-Kammeranordnung mit einer ersten Kammeranordnung und einer von dieser getrennten zweiten Kammeranordnung ausgebildet ist, wobei die erste Kammeranordnung eine erste Unterdruckkammer und eine von dieser durch eine erste bewegliche Wand getrennte erste Arbeitskammer aufweist. Die zweite Kammeranordnung weist dabei eine zweite Unterdruckkammer und eine von dieser durch eine zweite bewegliche Wand getrennte zweite Arbeitskammer auf. Ferner sind die erste und zweite Kammeranordnung über das Steuerventil mit Druck beaufschlagbar. In diesem Zusammenhang kann erfindungsgemäß auch vorgesehen sein, dass die erste bewegliche Wand und die zweite bewegliche Wand zum Zwecke einer gemeinsamen Bewegung miteinander, vorzugsweise starr, gekoppelt sind.

Es wurde im Rahmen der bisherigen Erfindungsgebeschreibung mehrfach erwähnt, dass das Krafteingangsglied nicht unmittelbar mechanisch mit der Betätigungskraft-Erzeugungseinrichtung gekoppelt ist. Um dennoch dem Fahrer den gewohnten Eindruck zu vermitteln, dass die Bremsanlage einer Betätigung des Bremspedals einen mechanischen Widerstand entgegensetzt, sieht die Erfindung eine an sich bekannte Pedalgegenkraft-Simulationseinrichtung vor. Eine derartige Pedalgegenkraft-Simulationseinrichtung kann beispielsweise in unmittelbarer Nähe zu dem Krafteingangsglied angeordnet werden. Dies führt jedoch im Allgemeinen zu einer erheblichen Bauraumvergrößerung der Anordnung, was der Forderung nach Kompaktheit entgegensteht. Die Erfindung sieht zur Vermeidung derartiger Bauraumvergrößerungen vor, dass die Pedalgegenkraft-Simulationseinrichtung platzsparend in dem erfindungsgemäßen Bremskrafterzeuger integriert ist. Eine Maßnahme zur Realisierung einer derart integrierten Lösung liegt erfindungsgemäß beispielsweise darin, dass das Krafteingangsglied über eine Übertragungskolbenanordnung mit der Pedalgegenkraft-Simulationseinrichtung gekoppelt ist.

Um dem Fahrer ein aus herkömmlichen Bremssystemen bekanntes Widerstandsverhalten bei der Betätigung des Bremspedals vermitteln zu können, sieht eine Weiterbildung der Erfindung vor, dass die Dämpferanordnung eine über einen durch das Pedalgegenkraft-Hydrauliksystem verlagerbaren Kraftkolben komprimierbare Simulationsfeder oder/und fluidische Dämpfungsmittel, vorzugsweise eine Drossel, oder/und eine gummielastische Anschlagscheibe aufweist. Während sich mit der Simulationsfeder und der gummielastischen Anschlagscheibe eine progressive Kraftänderung mit zunehmender Pedalbetätigung erreichen lässt, dienen die fluidischen Dämpfungsmittel insbesondere zur Herbeiführung einer Hysterese, die eine verzögerte Rückbewegung des Bremspedals nach dessen Freigabe zur Folge hat. Darüber hinaus haben die fluidischen Dämpfungsmittel die Wirkung, dass sie bei einer ausreichend schnellen Betätigung des Bremspedals dem Fahrer ein von herkömmlichen Bremssystemen bekanntes Widerstandsgefühl vermitteln, und zwar in jeder Betriebssituation der erfindungsgemäßen Bremsanlage.

Wie vorstehend bereits dargelegt, ist der erfindungsgemäße Bremskrafterzeuger so ausgebildet, dass er auch nach einem Ausfall einzelner Komponenten eine zuverlässige Bremswirkung gewährleistet. Insbesondere dann, wenn es erforderlich ist, die von dem Fahrer auf das Bremspedal ausgeübte Pedalbetätigungskraft zur Erzeugung einer Betätigungskraft in einer Notfallbetriebssituation bestmöglich auszunutzen, ist es zu vermeiden, dass ein Teil der Pedalbetätigungskraft aufgrund der Wirkung der Pedalgegenkraft-Simülationseinrichtung dissipiert. Eine Weiterbildung der Erfindung sieht daher vor, die Pedalgegenkraft-Simulationsvorrichtung bedarfsweise zu- bzw. abzuschalten. Insbesondere sieht eine Ausführungsform der Erfindung in diesem Zusammenhang vor, dass das Hydrauliksystem der Pedalgegenkraft-Simulationsvorrichtung mit einem ansteuerbaren Trennventil ausgebildet ist, das in einer ersten Stellung, vorzugsweise in seiner Passivstellung, die Dämpferanordnung und die Übertragungskolbenanordnung hydraulisch voneinander entkoppelt und eine im Wesentlichen ungedämpfte Bewegung der Übertragungskolbenanordnung zulässt und das in einer zweiten Stellung, vorzugsweise in seiner Aktivstellung, die Dämpferanordnung und die Übertragungskolbenanordnung hydraulisch miteinander koppelt. Hinsichtlich der Ansteuerung des Trennventils kann erfindungsgemäß vorgesehen sein, dass das Trennventil zu Beginn einer Bremspedalbetätigung aus seiner Passivstellung in seine Aktivstellung geschaltet wird und erst nach Beendigung der Bremspedalbetätigung wieder aus seiner Aktivstellung in seine Passivstellung geschaltet wird. Darüber hinaus kann das Trennventil bereits zur Erzielung eines Drosseleffekts ausgenützt werden, indem es mit einem Drosselelement, vorzugsweise mit einer federvorgespannten Drosselblende versehen wird, die in der Aktivstellung des Trennventils eine Hydraulikfluid-Strömung zu der Dämpferanordnung drosselt. Dadurch kann der Hystereseeffekt sowie der Dämpfungseffekt der Dämpferanordnung weiter verstärkt werden. Vorzugsweise ist die Drosselblende so angeordnet, dass sie auch dann, wenn das Trennventil in seine Passivstellung geschaltet ist, eine Fluidströmung in dem Hydrauliksystem drosselt, so dass der Fahrer beispielsweise in einer Notfallbetriebssituation, in der die Dämpferanordnung nicht mit dem Bremspedal gekoppelt ist, bei einer Betätigung des Bremspedals einen Widerstand spürt.

Hinsichtlich der Ausgestaltung des Hauptbremszylinders sieht eine Weiterbildung der Erfindung vor, dass dieser in einem Zylindergehäuse, vorzugsweise als einseitig offene Zylinderbohrung, ausgebildet ist. Vorzugsweise ist das Trennventil, integriert oder als separate Baugruppe an diesem angebracht. Der erfindungsgemäße Bremskrafterzeuger kann auch dadurch noch kompakter gestaltet werden, dass die Dämpferanordnung in dem Zylindergehäuse integriert oder als separate Baugruppe an diesem angebracht ist. So kann die eigentlich bauraumfordernde Einheit der Pedalgegenkraft-Simulationseinrichtung, nämlich die Dämpferanordnung, an einer Stelle angeordnet werden, wo Bauraum zur Verfügung steht, und muss nicht in unmittelbarer Pedalnähe positioniert werden.

Zu Gunsten einer einfachen Montierbarkeit sowie eines kompakten Aufbaus sieht eine Weiterbildung der Erfindung vor, dass das Zylindergehäuse zusammen mit den darin angeordneten Komponenten als Baugruppe in das Basisgehäuse einschiebbar und mit diesem lösbar verbunden ist.

Ferner kann zur Erhöhung der Zuverlässigkeit des Bremssystems erfindungsgemäß ferner vorgesehen sein, dass in dem Hauptbremszylinder ein Sekundärkolben verlagerbar geführt ist, dass der Sekundärkolben mit dem Hauptbremszylinder eine Sekundärdruckkammer zur Erzeugung eines hydraulischen Bremsdrucks einschließt, und dass der Primärkolben mit dem Hauptbremszylinder und dem Sekundärkolben zur Erzeugung eines hydraulischen Bremsdrucks die Primärdruckkammer einschließt. In diesem Zusammenhang kann darüber hinaus vorgesehen sein, dass der Primärkolben und gegebenenfalls der Sekundärkolben vermittels diesen zugeordneten Vorspannfedern jeweils in eine Ausgangsstellung vorgespannt sind.

Vorstehend wurde bereits auf die einzelnen Komponenten der Pedalgegenkraft-Simulationseinrichtung eingegangen. Hinsichtlich deren Anordnung sieht eine Weiterbildung der Erfindung vor, dass der Primärkolben mit einer Durchgangsbohrung versehen ist, in der ein Betätigungskolben geführt ist, wobei der Betätigungskolben eine Betätigungszylinderbohrung aufweist, in der ein Trennkolben vermittels der Übertragungskolbenanordnung verlagerbar geführt ist, wobei der Trennkolben in dem Betätigungskolben eine Hydraulikfluidkammer begrenzt, die fluidisch mit dem Hydrauliksystem der Pedalgegenkraft-Simulationseinrichtung gekoppelt ist. Um einen permanenten Kontakt zwischen der Übertragungskolbenanordnung und dem Trennkolben sicherzustellen und um somit eine zuverlässige Kopplung des Krafteingangsglieds mit der Pedalgegenkraft-Simulationseinrichtung gewährleisten zu können, sieht eine Weiterbildung der Erfindung vor, dass eine den Trennkolben kontaktierende Komponente der Übertragungskolbenanordnung mit dem Trennkolben magnetisch oder/und adhäsiv oder/und durch Verrastung lösbar gekoppelt ist. Darüber hinaus kann erfindungsgemäß vorgesehen sein, dass der Betätigungskolben in dem Zylindergehäuse festgelegt ist. Alternativ hierzu kann erfindungsgemäß vorgesehen sein, dass der Betätigungskolben relativ zu dem Zylindergehäuse verlagerbar ist. Vorzugsweise ist in diesem Zusammenhang vorgesehen, dass der Betätigungskolben gegen die Wirkung eines Federelements relativ zu dem Zylindergehäuse verlagerbar ist. Das Federelement kann dabei unter Vorspannung stehen, so dass eine Verlagerung erst bei Überschreitung einer bestimmten Mindestkraft erfolgt. Zur Kopplung von Betätigungskolben und Federelement kann in einer konstruktiv einfachen und dennoch zuverlässigen Ausführungsvariante der Erfindung ein an dem Betätigungskolben angebrachter Anschlagstift dienen.

Die Erfindung sieht ferner eine elektronische Steuereinrichtung vor, die die Pedalbetätigungs-Erfassungseinrichtung überwacht, und den elektromagnetischen Aktuator nach Maßgabe eines Ausgangssignals der Pedalbetätigungs-Erfassungseinrichtung, vorzugsweise unter Berücksichtigung einer vorgegebenen Kennlinie oder eines vorgegebenen Kennlinienfeldes, ansteuert. Aus dem Kennlinienfeld können in Abhängigkeit von herrschenden Betriebsparametern einzelne Kennlinien ausgewählt und der Ansteuerung des Bremskrafterzeugers zugrunde gelegt werden. Je nach Ausbildung des Bremssystems kann erfindungsgemäß weiter vorgesehen sein, dass die Kennlinie oder das Kennlinienfeld fest vorgegeben oder an erfasste Betriebsparameter adaptierbar ist. So ist es auch möglich auf Fahrerwunsch oder in Anpassung an das ermittelte Fahrerverhalten verschiedene das Verhalten der Bremse bestimmende Kennlinien auszuwählen oder zu erstellen.

Eine Weiterbildung der Erfindung sieht in diesem Zusammenhang vor, dass die elektronische Steuereinrichtung den elektromagnetischen Aktuator nach Maßgabe eines im Hydrauliksystem der Pedalgegenkraft-Simulationseinrichtung, beispielsweise am Trennventil, erfassten Hydraulikdrucks ansteuert. Ferner kann hinsichtlich der Ansteuerung des erfindungsgemäßen Bremskrafterzeugers vorgesehen sein, dass die elektronische Steuereinrichtung den elektromagnetischen Aktuator nach Maßgabe eines von einem Fahrzeugregelsystem ermittelten Parameters, wie beispielsweise dem Abstand zu einem voranfahrenden Fahrzeugs, dem gegenwärtigen Hydraulikdruck im Bremssystem, der aktuellen Fahrzeugverzögerung oder dergleichen, ansteuert. Darüber hinaus ist es erfindungsgemäß möglich, dass die elektronische Steuereinrichtung den elektromagnetischen Aktuator nach Maßgabe einer zeitlichen Änderung des Ausgangssignals der Pedalbetätigungs-Erfassungseinrichtung oder/und des im Hydrauliksystem der Pedalgegenkraft-Simulationseinrichtung, beispielsweise am Trennventil, erfassten Hydraulikdrucks ansteuert. Wie vorstehend dargelegt, ist es in bestimmten Betriebssituationen erforderlich, die Pedalgegenkraft-Simulationseinrichtung zu deaktivieren. Hierfür kann vorgesehen sein, dass die elektronische Steuereinrichtung das Trennventil nach Maßgabe eines Ausgangssignals der Pedalbetätigungs-Erfassungseinrichtung ansteuert.

Ferner kann vorgesehen sein, dass die elektronische Steuereinrichtung bei der Ansteuerung des elektromagnetischen Aktuators ein Ausgangssignal des Positionssensors berücksichtigt. Dadurch kann erreicht werden, dass die gegenwärtige Position der beweglichen Wand, oder im Falle einer Tandemanordnung beider beweglichen Wände, als Rückkopplungsinformation genutzt werden, um zu Korrekturzwecken den Aktuator im Rahmen einer Regelschleife erneut anzusteuern.

Die Erfindung wird im Folgenden anhand der beiliegenden Figuren erläutert. Es stellen dar:
- Fig.1: eine schematische Übersichtsdarstellung des erfindungsgemäßen Bremskrafterzeugers und der mit diesem gekoppelten Fahrzeugkomponenten;
- Fig.2: eine vergrößerte Seitenansicht des Bremskrafterzeugers;
- Fig.3: eine Längsschnittansicht des erfindungsgemäßen Bremskrafterzeugers in unbetätigter Stellung;
- Fig.4: eine Ansicht entsprechend Fig.3, jedoch in teilbetätigter Stellung;
- Fig.5: eine Detailansicht einer ersten Ausführungsform einer Dämpferanordnung einer Pedalgegenkraft-Simulationseinrichtung;
- Fig.6: eine Ansicht entsprechend Fig.5 einer zweiten Ausführungsform der Dämpferanordnung der Pedalgegenkraft-Simulationseinrichtung;
- Fig.7: eine Schnittansicht geschnitten entlang der Schnittlinie VII-VII aus Fig.2;
- Fig.8: eine dritte Ausführungsform des erfindungsgemäßen Bremskrafterzeugers und
- Fig. 9: eine vierte Ausführungsform des erfindungsgemäßen Bremskrafterzeugers.

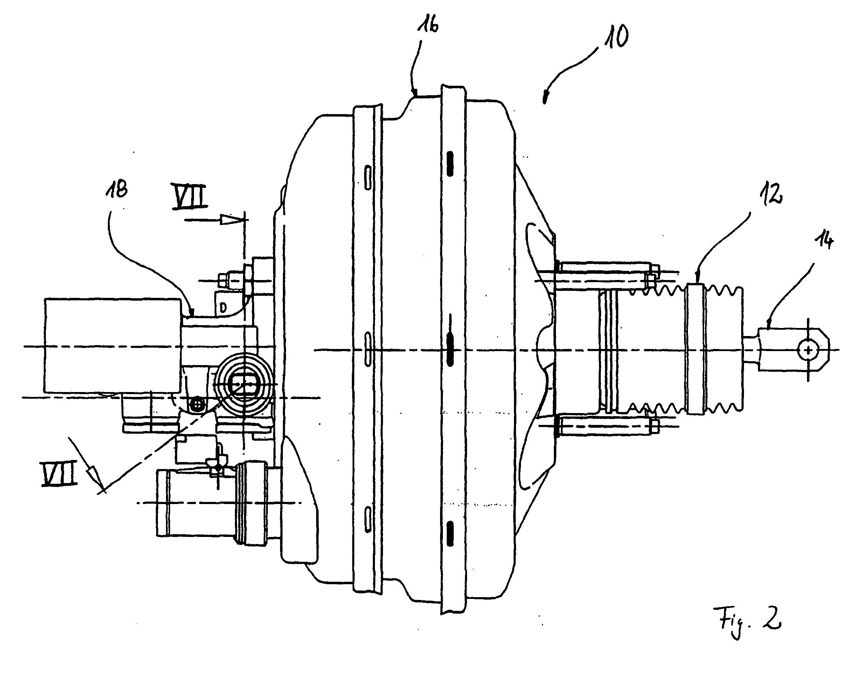

In Fig.2 ist ein erfindungsgemäßer Bremskrafterzeuger in Seitenansicht dargestellt und allgemein mit 10 bezeichnet. Dieser umfasst eine Betätigungseinheit 12, in die ein Krafteingangsglied 14 eingeführt ist. Das Krafteingangsglied 14 ist an seinem freien Ende mit einem in Fig. 2 nicht gezeigten Bremspedal koppelbar. Die Betätigungseinheit 12 ist an eine Kammeranordnung 16 angeschlossen. An der von der Betätigungseinheit 12 abgewandten Seite der Kammeranordnung 16 ist ein Teil eines Zylindergehäuses 18 des Hauptbremszylinders erkennbar.

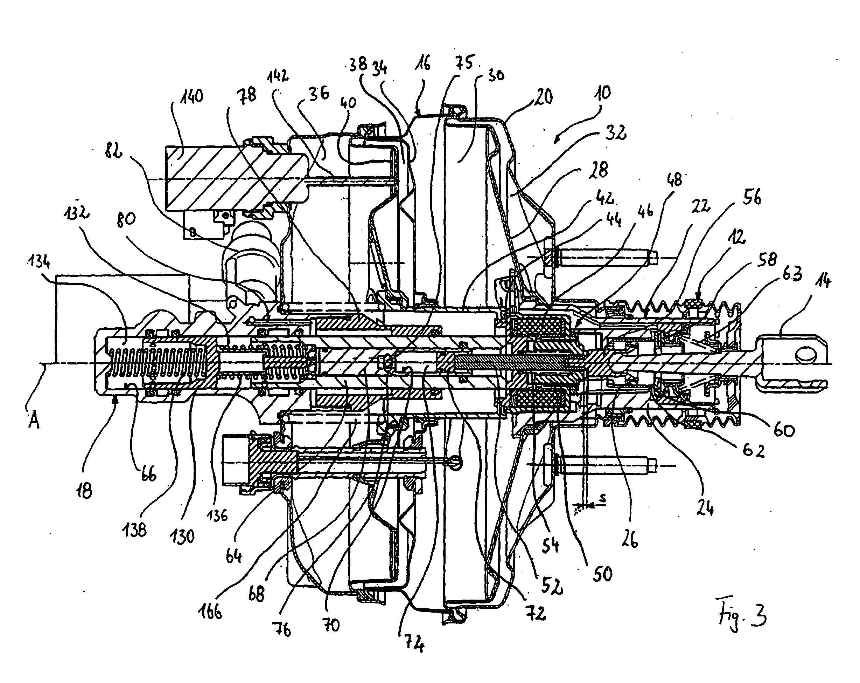

Für eine detaillierte Beschreibung des Aufbaus des erfindungsgemäßen Bremskrafterzeugers 10 soll im Folgenden auf Fig.3 Bezug genommen werden. Der erfindungsgemäße Bremskrafterzeuger 10 besteht in seiner Grundstruktur aus zwei Modulen, nämlich zum einen das Zylindergehäuse 18 und zum anderen das Bremskrafterzeugergehäuse 20, in das das Zylindergehäuse 18 eingesetzt und mit dem es lösbar verbunden ist. In dem in Fig.3 rechten Teil des Bremskrafterzeugers 10, insbesondere des Gehäuses 20, mündet das stangenförmig ausgebildete Krafteingangsglied 14. In diesem Bereich ist ein Steuerventil 22 vorgesehen. Das Steuerventil 22 umfasst ein Steuerventilgehäuse 24, das relativ zu dem Gehäuse 20 verlagerbar ist. Innerhalb des Steuerventilgehäuses 24 ist eine relativ zu diesem verlagerbare Ventilhülse 26 vorgesehen.

Das Steuerventilgehäuse 24 ist fest mit einer in der Kammeranordnung 16 angeordneten ersten beweglichen Wand 28 gekoppelt. Die erste bewegliche Wand 28 unterteilt den in Fig.3 rechten Teil der Kammeranordnung 16 in eine Unterdruckkammer 30 und eine Arbeitskammer 32. Die Unterdruckkammer 30 ist über eine in dem Gehäuse 20 festgelegte starre Wand 34 von dem in Fig.3 linken Teil der Kammeranordnung 16 getrennt. Auch dieser Teil der Kammeranordnung 16 umfasst eine Unterdruckkammer 36 und eine Arbeitskammer 38, die durch eine zweite bewegliche Wand 40 voneinander getrennt sind. Die erste bewegliche Wand 28 und die zweite bewegliche Wand 40 sind zum Zwecke einer gemeinsamen Bewegung starr miteinander gekoppelt. Hierzu ist die zweite bewegliche Wand 40 auf einer Koppelhülse 42 befestigt, die über eine Verbindungsbuchse 44 fest mit dem Steuerventilgehäuse 24 verbunden ist.

In dem Steuerventilgehäuse 24 ist eine elektrisch ansteuerbare Spule 46 eines elektromagnetischen Aktuators 48 angeordnet. Der Aktuator 48 umfasst ferner einen relativ zu dem Steuerventilgehäuse 24 sowie zu der Spule in Richtung der Längsachse A des Bremskrafterzeugers 10 verlagerbaren magnetischen Anker 50. Der Anker 50 ist für eine gemeinsame Bewegung in axialer Richtung mit der Ventilhülse 26 gekoppelt. Darüber hinaus ist der Anker 50 mit einer axialen Durchgangsbohrung versehen, durch die sich ein Übertragungskolben 52 verschiebbar erstreckt. Der Anker 50 ist über eine Feder 54 in die in Fig.3 gezeigte Stellung vorgespannt. An seinem in Fig.3 rechten Ende ist der Übertragungskolben 52 über ein Koppelelement 56 mit dem Krafteingangsglied 14 kraftübertragend verbunden. Zwischen dem Anker 50 und dem Koppelelement 56 ist in dem in Fig.3 gezeigten Ruhezustand des Bremskrafterzeugers 10 ein Sicherheitsspiel s vorgesehen.

Die Ventilhülse 26, das Steuerventilgehäuse 24 und ein relativ zu diesen verlagerbares Ventilelement 58 bilden das eigentliche Steuerventil 22. In dem in Fig.3 gezeigten Zustand liegt die Ventilhülse 26 mit ihrem dem Ventilelement 58 zugewandten Hülsendichtsitz 60 an dem Ventilelement 58 an. Ferner ist in diesem Zustand ein an dem Steuerventilgehäuse 24 ausgebildeter Gehäusedichtsitz 62 von dem Ventilelement 58 abgehoben. In dem in Fig. 3 gezeigten Zustand verbindet das Steuerventil 22 jeweils die Unterdruckkammer 30 mit der Arbeitskammer 32 und die Unterdruckkammer 36 mit der Arbeitskammer 38. Die Unterdruckkammern 30 und 36 sind dabei mit einer nicht gezeigten Unterdruckquelle gekoppelt, beispielsweise mit dem Ansaugtrakt eines Verbrennungsmotors eines mit dem Bremskrafterzeuger 10 ausgestatteten Fahrzeugs oder mit einer gesondert ausgebildeten Vakuumpumpe. Das Krafteingangsglied wird über eine Rückstellfeder 63 in die in Fig.3 gezeigte Stellung vorgespannt.

Der Übertragungskolben 52 erstreckt sich mit seinem in Fig.3 linken Ende in einen Primärkolben 64 hinein, der mit einer axialen Durchgangsbohrung ausgeführt ist. Der Primärkolben 64 ist dichtend in einer einseitig offenen Bohrung 66 geführt, die in dem Zylindergehäuse 18 ausgebildet ist. In der Durchgangsbohrung des Primärkolbens 64 ist ein Betätigungskolben 68 verlagerbar geführt. Auch der Betätigungskolben 68 weist eine einseitig offene Bohrung 70 auf, die mit einem in dieser verlagerbaren Trennkolben 72 verschlossen ist. Der Trennkolben 72 schließt mit dem Betätigungskolben 68 eine Hydraulikkammer 74 ein. Der Betätigungskolben 68 liegt über einen Anschlagstift 75, der durch einen im Primärkolben 64 vorgesehenen Langlochschacht 73 hindurch geführt ist, an einer Durchmesserstufe im Inneren einer fest mit dem Zylindergehäuse 18 gekoppelten Verschlusshülse 78 an. Er ist dadurch an einer Axialbewegung in Fig. 3 nach rechts gehindert.

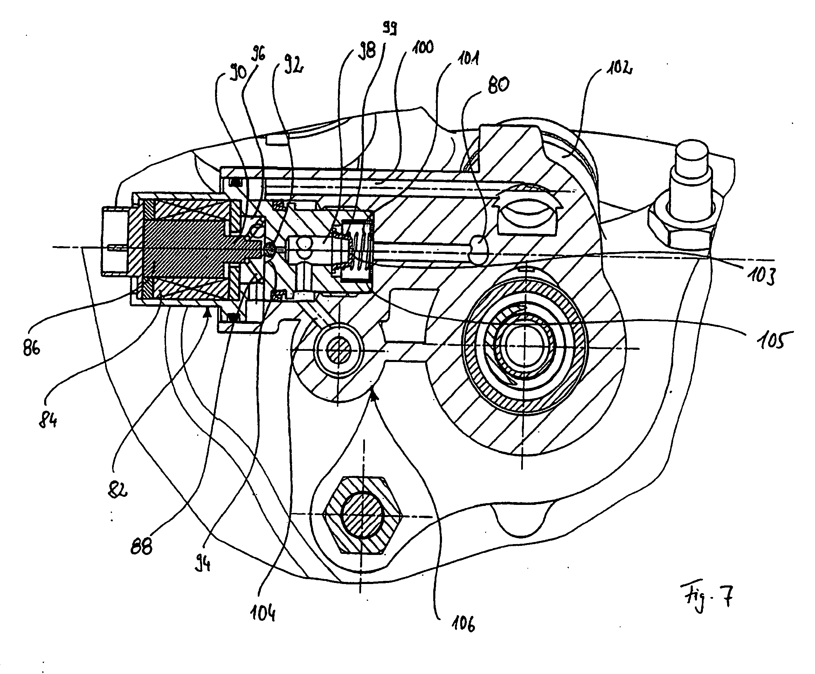

Die Hydraulikkammer 74 ist über einen Verbindungskanal 76 mit dem Innenraum der Verschlusshülse 78 verbunden und kommuniziert über diesen Innenraum mit einem in dem Zylindergehäuse 18 ausgebildeten Fluidkanal 80. Der Fluidkanal 80 führt zu dem in Fig.7 näher in einer Schnittdarstellung gezeigten elektromagnetischen Trennventil 82. Dieses umfasst eine elektromagnetisch ansteuerbare Spule 84 und einen in der Spule 84 beweglich geführten Anker 86. Der Anker 86 ist über eine Rückstellfeder 88 in die in Fig.7 gezeigte Stellung vorgespannt. Der Anker 86 besitzt einen Fortsatz 90 mit dessen freien Ende er ein kugelförmiges Ventilelement 92 gegen einen Ventilsitz 94 drücken kann. Der Ventilsitz 94 verbindet eine Fluidkammer 96 über eine mit dem Ventilelement 92 abdichtbare Durchgangsbohrung mit einer Vorkammer 98. Die Fluidkammer 96 ist über einen Verbindungskanal 100 mit einem Hydraulikfluidreservoir 102 fluidisch verbunden. Die Vorkammer 98 ist über einen Verbindungskanal 104 mit einer Pedalgegenkraft-Simulationseinrichtung 106 fluidisch verbunden.

In der Vorkammer 98 ist eine Drosselblende 99 über eine Vorspannfeder 101 zum Ventilelement 92 hin vorgespannt. Die Drosselblende 99 weist eine Drosselbohrung 103 auf. Ferner ist in der Vorkammer 98 ein die Montage erleichterndes Halteelement 105 angeordnet.

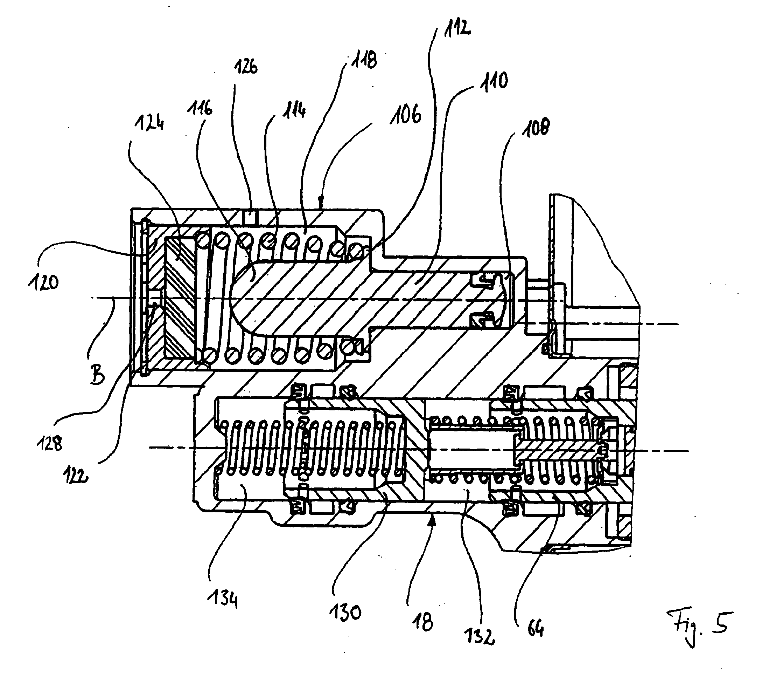

Die Pedalgegenkraft-Simulationseinrichtung 106 ist in Fig.5 in einer ersten Ausführungsform, in welcher sie in das Zylindergehäuse 18 integriert ist, vergrößert und in Schnittdarstellung gezeigt. Der Verbindungskanal 104 mündet in eine Hydraulikkammer 108, die mittels eines Simulationskolbens 110 abgegrenzt ist. Der Simulationskolben 110 ist entlang einer Längsachse B innerhalb des Zylindergehäuses 18 verlagerbar. Er weist einen Anlageflansch 112 auf, an dem ein Ende einer Simulationsfeder 114 anliegt. Ferner weist der Simulationskolben 110 einen in die Simulationsfeder 114 hineinragenden abgerundeten Fortsatz 116 auf. Die Simulationsfeder 114 ist in einer Federkammer 118 angeordnet, die mit einem vermittels eines Befestigungsrings 122 gesicherten Verschlussstopfen 120 geschlossen ist. Der Verschlussstopfen 120 weist eine zentrale Öffnung 128 auf. Darüber hinaus ist die Federkammer 118 über eine seitliche Bohrung 126 mit der Atmosphäre verbunden. In dem Verschlussstopfen 120 ist eine gummielastische Anschlagscheibe 124 angeordnet, in die bei hinreichend weiter Verlagerung entlang der Achse B der Fortsatz 116 des Simulationskolbens 110 elastisch eintauchen kann.

Wendet man sich wiederum dem Aufbau des erfindungsgemäßen Bremskrafterzeugers zu, wie er in Fig.3 dargestellt ist, so erkennt man in dieser Darstellung, dass in dem Zylindergehäuse 18 neben dem Primärkolben 64 ferner ein Sekundärkolben 130 verschiebbar aufgenommen ist. Der Primärkolben 64 begrenzt zusammen mit der Begrenzungswand der Bohrung 66 und dem Sekundärkolben 130 sowie dem in Fig.3 linken Ende des Betätigungskolbens 68 eine Primärdruckkammer 132. Der Sekundärkolben 130 begrenzt zusammen mit der Begrenzungswand der Bohrung 66 eine Sekundärdruckkammer 134. Primärkolben und Sekundärkolben sind über Rückstellfedern 136 und 138 in die in Fig.3 gezeigte Position vorgespannt.

Schließlich ist in Fig.3 noch ein Positionssensor 140 gezeigt. Der Positionssensor 140 weist einen in Fig.3 nach rechts federvorgespannten Stößel 142 auf, der mit seinem freien Ende stets an der beweglichen Wand 40 anliegt und deren aktuelle Position erfasst.

Hinsichtlich der Montage des in Fig. 3 gezeigten Bremskrafterzeugers 10 ist anzumerken, dass dieser an sich aus zwei Basisbaugruppen besteht. Die erste Basisbaugruppe umfasst das Gehäuse 20 und alle darin angeordneten Komponenten, insbesondere die Komponenten der Kammeranordnung 16 sowie des Steuerventils 22. Die zweite Basisbaugruppe umfasst das Zylindergehäuse 18 und alle daran angebrachten Komponenten, insbesondere die Pedalgegenkraft-Simulationseinrichtung 108, das Trennventil 82, sowie den Primärkolben 64 und den Sekundärkolben 130. Diese beiden Basisbaugruppen sind vormontiert und im vormontierten Zustand miteinander verbindbar, wobei das Zylindergehäuse 18 in das Gehäuse 20 dichtend eingeführt werden kann. Die Schnittstelle dieser beiden Komponenten bilden dann die gegenseitig in Kontakt tretenden Anlageflächen von Primärkolben 64 und Verbindungsbuchse 44 sowie Übertragungskolben 52 und Trennkolben 72. Insbesondere die Schnittstelle zwischen Übertragungskolben 52 und Trennkolben 72 ist spielfrei auszubilden, um dem Fahrer ein unmittelbares Ansprechen des Bremssystems auf eine Pedalbetätigung zu vermitteln. Daher ist der Trennkolben 72 magnetisch ausgebildet, so dass er den ferromagnetischen Übertragungskolben 52 zwangsläufig bei der Montage kontaktiert und mit diesem in Kontakt bleibt. Gewünschtenfalls kann die Bohrung 70 an ihrem offenen Ende auch mit einem nachträglich angebrachten Anschlag versehen sein, beispielsweise einem Sicherungsring oder einer Bördelung, so dass ein unbeabsichtigtes Herausgleiten des Trennkolbens 72 verhindert wird.

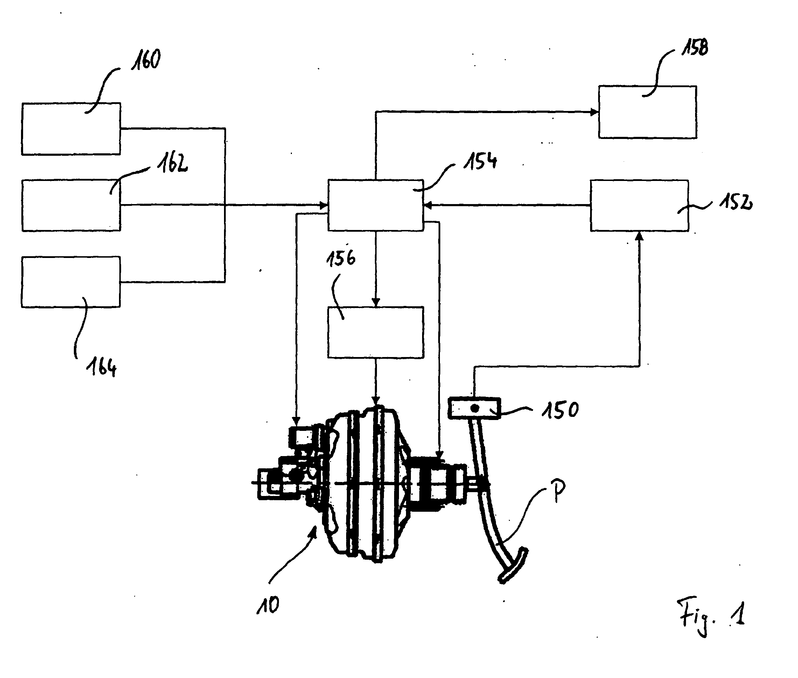

Bevor auf die eigentliche Funktionsweise des erfindungsgemäßen Bremskrafterzeugers 10 eingegangen wird, soll dessen Einbindung in ein Fahrzeugbremssystem unter Berücksichtigung von Fig.1 näher erläutert werden. Dort ist schematisiert der erfindungsgemäße Bremskrafterzeuger 10 mit einem Bremspedal P gezeigt. Eine Pedalbetätigung wird über einen Drehwinkelsensor 150 erfasst und an eine Drehwinkelsensor-Auswerteeinrichtung 152 übermittelt. Diese übermittelt an eine elektronische Steuereinheit 154 ein der aktuellen Pedalbetätigung entsprechendes Signal. Nach Maßgabe des die aktuelle Pedalbetätigung charakterisierenden Signals steuert die elektronische Steuereinheit 154 eine Vakuumpumpe 156 sowie weitere Komponenten des Bremskrafterzeugers 10 an, wie dies im Folgenden noch erläutert wird. Darüber hinaus steuert die elektronische Steuereinheit 154 eine Bremsleuchte 158 in Reaktion auf eine erfasste Pedalbetätigung an. Die elektronische Steuereinheit 154 erhält ferner Signale von verschiedenen Regelsystemen innerhalb des Fahrzeugs, wie beispielsweise einem elektronischen Stabilitätsprogramm 160, einem Antiblockiersystem 162, einem automatischen Abstandshaltesystem (cruise control) 164 oder dergleichen. Die von diesen Programmen zu der elektronischen Steuereinheit 154 fließenden Signale werden ausgewertet und zur Ansteuerung des erfindungsgemäßen Bremskrafterzeugers genutzt.

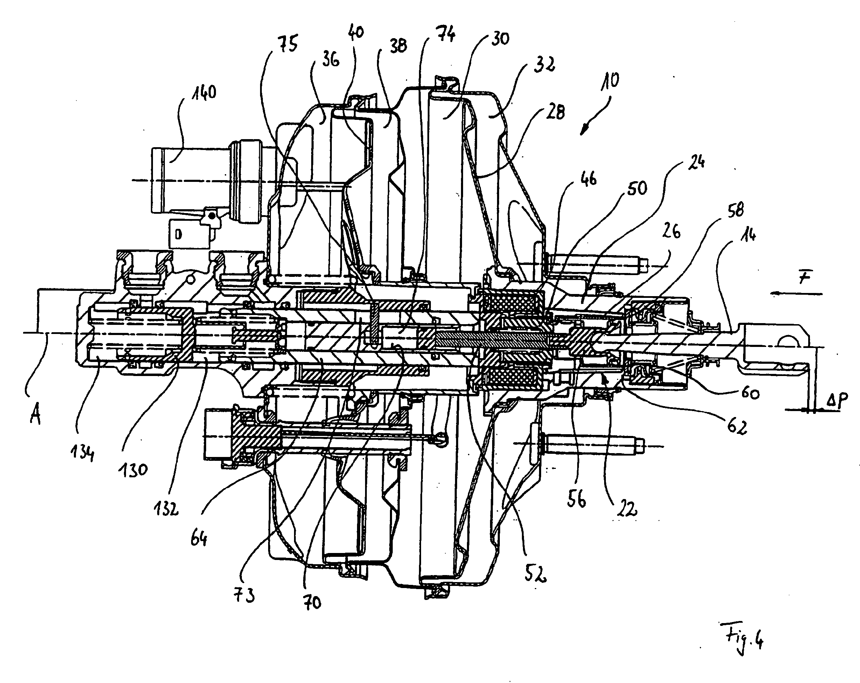

Im Folgenden soll unter Bezugnahme auf Fig.3 und 4 die Funktionsweise des erfindungsgemäßen Bremskrafterzeugers erörtert werden.

Fig.4 zeigt den erfindungsgemäßen Bremskrafterzeuger 10 in teilbetätigter Stellung bei normaler Funktionsweise. In Folge einer Betätigung des Bremspedals wird das Krafteingangsglied 14 mit der Kraft F beaufschlagt und gegenüber der in Fig. 3 gezeigten Ausgangsstellung um die Strecke Δp entlang der Längsachse A des Bremskrafterzeugers verlagert. Die Bremspedalbetätigung wird unmittelbar von dem in Fig.1 gezeigten Drehwinkelsensor 150 erfasst und an die elektronische Steuereinheit 154 weitergeleitet. Diese steuert die Spule 46 an und bestromt diese nach Maßgabe vorgegebener Kennlinien und ggf. unter Berücksichtigung weiterer Parameter, beispielsweise von dem Stabilitätsprogramm 160, dem Antiblockiersystem 162 oder der Abstandskontrolleinrichtung 164. Durch die Bestromung der Spule 46 baut sich in dieser ein Magnetfeld auf, welches den Anker 50 in Fig.4 nach links in die Spule hineinzieht. Dabei wird die Ventilhülse 26 von dem Anker 50 mitgenommen. Das Ventilelement 58 bewegt sich solange mit der Ventilhülse 26 mit, bis es an dem Gehäusedichtsitz 62 zur Anlage kommt. Sodann hebt der Hülsendichtsitz 60 von dem Ventilelement 58 ab. In der Folge werden die erste Unterdruckkammer 30 von der ersten Arbeitskammer 32 und die zweite Unterdruckkammer 36 von der zweiten Arbeitskammer 38 isoliert sowie die Arbeitskammern 32 und 38 mit der Umgebungsatmosphäre verbunden. Es baut sich ein Überdruck in den Arbeitskammern 32 und 38 auf, der zu einer Verlagerung des Steuerventilgehäuses 24 entgegen einer Kraft einer Rückstellfeder 166 führt und damit auch zu einer Verlagerung des Primärkolbens 64 und des Sekundärkolbens 130. Dadurch baut sich in der Primärdruckkammer 132 und in der Sekundärkammer 134 jeweils ein Bremsdruck auf, der in einem an dem Bremskrafterzeuger 10 angeschlossenen Fahrzeugbremssystem zum Abbremsen des Fahrzeugs genutzt wird. Die beiden beweglichen Wände 28 und 40 bewegen sich zusammen mit dem Steuerventilgehäuse 24 soweit, bis sich beide Dichtsitze, nämlich der Hülsendichtsitz 60 und der Gehäusedichtsitz 62, wieder in Anlage an dem Ventilelement 58 befinden. In diesem Zustand ist das System im Gleichgewicht und es tritt ohne äußere Einwirkung keine weitere Änderung mehr ein.

Wie vorstehend dargelegt, erfolgt die Betätigung des Steuerventils 22 durch eine Verlagerung des Ankers 50, der über die in der Spule 46 erzeugte Magnetkraft entlang der Längsachse A bewegt wird. Die Bewegung des Krafteingangsglieds 14 und die diese initiierende Kraft F wird allerdings in dem in Fig.4 gezeigten betätigten Zustand nicht auf den Anker 50 übertragen. Vielmehr wird diese Bewegung des Krafteingangsglieds 14 über das Koppelelement 56 auf den Übertragungskolben 52 übertragen. Der Übertragungskolben 52 wird in der Folge innerhalb des Primärzylinders 64, insbesondere innerhalb der einseitig offenen Bohrung 70 des Betätigungskolbens 68 verlagert und verschiebt dabei den Trennkolben 72 in Fig.4 nach links, wobei der Betätigungskolben 68 wegen des in der Primärdruckkammer 132 herrschenden Hydraulikdrucks relativ zu dem Gehäuse 18 in seiner Position verharrt. Durch die Bewegung des Trennkolbens 72 wird Hydraulikfluid aus der Hydraulikkammer 74 über den Verbindungskanal 76 und den Fluidkanal 80 zu dem elektromagnetischen Trennventil 82 gefördert. Das elektromagnetische Trennventil 82 wird infolge der erfassten Pedalbetätigung von der elektronischen Steuereinheit 154 in seine Aktivstellung geschaltet, in welcher es das Ventilelement 92 an den Ventilsitz 94 drückt. Dadurch kann das zu dem Trennventil 82 geförderte Hydraulikfluid nicht in das Hydraulikfluidreservoir 102 strömen, sondern wird gegen den Widerstand der Pedalgegenkraft-Simulationsvorrichtung 106 in die Hydraulikkammer 108 gefördert. Dabei wird der Simulationskolben 110 unter Komprimierung der Simulationsfeder 114 in die Federkammer 118 hinein verschoben. Je nach Geschwindigkeit der Verschiebung des Simulationskolbens 110 kommt es zu einer fluidischen Dämpfung aufgrund einer Drosselwirkung der Drosselblende 99 beim Hindurchströmen von Hydraulikfluid durch deren Drosselöffnung und der Bohrung 126 beim Austreten der in der Federkammer 118 enthaltenen Luft. Schließlich kommt es bei hinreichend weiter Auslenkung des Fortsatzes 116, zu einer starken gedämpften Bewegung des Simulationskolbens 110, sobald der Fortsatz 116 mit der gummielastischen Anschlagscheibe 124 in Kontakt tritt und diese komprimiert.

Wird das Bremspedal von dem Fahrer wieder freigegeben, so bewegt sich das System aus der in Fig. 4 gezeigten Stellung in die Fig. 3 gezeigte Stellung zurück. Das Krafteingangsglied 14 wird dabei aufgrund der Wirkung der Pedalgegenkraft-Simulationseinrichtung 106 und weiterer Rückstellfedern in seine Ausgangsstellung zurück bewegt. Diese Rückstellbewegung erfolgt jedoch mit Hysterese, da zum einen durch die Bohrung 126 nur gedrosselt Luft in die Federkammer 118 eintreten kann und zum anderen auch die Drosselblende 99 ein Zurückströmen von Hydraulikfluid in die Hydraulikkammer 74 drosselt.

Während der Ansteuerung des Aktuators 48 erfasst die elektronische Steuereinheit 154 permanent über den Positionssensor 140 die aktuelle Position der zweiten beweglichen Wand 40 und der mit dieser gekoppelten ersten beweglichen Wand 28. Dadurch kann die Ist-Position des Steuerventilgehäuses 24 erfasst werden und mit einer durch die Pedalbetätigung vorgegebenen Soll-Position verglichen werden. Bei einer Abweichung von Ist-Position und Soll-Position, beispielsweise aufgrund einer Veränderung der Pedalstellung durch den Fahrer oder aufgrund anderer äußerer Einflüsse, steuert die elektronische Steuereinheit 154 den Aktuator 48 korrigierend an. Im Falle einer Notbremsung, bei welcher das Bremspedal schnell und mit großer Betätigungskraft vom Fahrer niedergedrückt wird, kann die elektronische Steuereinheit 154 den Aktuator 48 auch überproportional stark bestromen, um schnell eine hohe Druckdifferenz in der Kammeranordnung 16 aufzubauen und um in der Folge eine für die Notbremsung hinreichend große Bremskraft mit dem Bremskrafterzeuger 10 zu erzeugen.

Die vorstehende Beschreibung zeigt, dass im Normalbetrieb die auf das Krafteingangsglied ausgeübte Bestätigungskraft F lediglich eine Verlagerung der Komponenten Koppelelement 56, Übertragungskolben 52 und infolge einer hydraulischen Übertragung eine Bewegung des Simulationskolbens 110 bewirkt, jedoch keinerlei unmittelbare Wirkung auf die Komponenten des Steuerventils 22 hat. Die den Primärkolben 64 verlagernde Betätigungskraft wird vielmehr durch Aktivierung des Aktuators 48 und Verlagerung des Ankers 50 initiiert, wodurch das Steuerventil 22 betätigt wird, um eine Druckdifferenz in der Kammeranordnung 16 zu erzielen. Aufgrund dieser Druckdifferenz verlagert sich das Steuerventilgehäuse 24 und mit diesem der Primärkolben 64 sowie der Sekundärkolben 130.

Im Folgenden sollen Notfallbetriebssituationen erläutert werden, die zeigen, dass der erfindungsgemäße Bremskrafterzeuger 10 trotz eines Defekts an einer oder mehreren Komponenten weiter funktioniert:

Eine erste zu betrachtende Notfallbetriebssituation tritt dann auf, wenn die Spule 46 nicht mehr ordnungsgemäß angesteuert wird. Dies kann beispielsweise daran liegen, dass der Drehwinkelsensor 150 defekt ist oder ein Defekt im Bordnetz des Fahrzeugs auftritt. Bei einem derartigen fehlerhaften Betriebszustand kann das Steuerventil 22 nicht mehr über den Aktuator 48 betätigt werden. Dennoch lässt sich mit dem erfindungsgemäßen Bremskrafterzeuger 10 eine hinreichend gute Bremswirkung erzielen. Bei einer Bremspedalbetätigung wird das Krafteingangsglied 14 in Fig. 3 nach links verlagert. Eine derartige Verlagerung bleibt solange wirkungslos, bis das Sicherheitsspiel s überwunden ist. Ist dies der Fall, so tritt das Koppelelement 56 in mechanischen Kontakt mit dem Anker 50 und verlagert diesen weiter in Fig. 3 nach links. Dadurch wird - ähnlich wie vorstehend für den ordnungsgemäßen Betrieb bei einer Verlagerung des Ankers 50 beschriebenen - die Ventilhülse 26 verlagert, bis der Gehäusedichtsitz 62 in Anlage mit dem Ventilelement 58 gelangt und der Hülsendichtsitz 60 von dem Ventilelement 58 abgehoben wird. Es kommt zu einer Druckdifferenz in der Kammeranordnung 16, die eine Verlagerung des Steuerventilgehäuses 24 und schließlich eine Verlagerung des Primärkolbens 64 nach sich zieht. Bei dieser ersten Notfallbetriebssituation muss also lediglich das Sicherheitsspiel s überwunden werden, bis eine Bremswirkung durch die auf das Bremspedal ausgeübte Pedalbetätigungskraft erreicht wird, die dann letztendlich analog zu einem herkömmlichen pneumatischen Bremskraftverstärker erzeugt wird.

Es ist darauf hinzuweisen, dass in der oben beschriebenen Notfallbetriebssituation, in der keine ordnungsgemäße Ansteuerung des Aktuators 48 erfolgt, über die elektronische Steuereinheit 154 auch keine Überführung des Trennventils 82 aus der in Figur 7 gezeigten Passivstellung in eine Aktivstellung erfolgt. Vielmehr verbleibt das Trennventil 82 in der in Figur 7 gezeigten Passivstellung, so dass der durch die Pedalbetätigung hervorgerufenen Verlagerung des Krafteingangsglieds 14 keine wesentliche Gegenkraft durch die Pedalgegenkraft-Simulationsvorrichtung 106 entgegengesetzt wird. Das durch die Verlagerung des Krafteingangsglieds 14 aus der Hydraulikkammer 74 herausgepresste Hydraulikfluid wird im Wesentlichen widerstandslos gedrückt. Allerdings wirkt trotz geschlossenem Trennventil 82 die Drosselblende 99 einer Hydraulikfluidströmung in das Reservoir 102 entgegen, so dass der Fahrer auch in der Notfallbetriebssituation und insbesondere bei einer schnellen Bremspedalbetätigung einen Widerstand am Bremspedal spürt.

Neben der vorstehend geschilderten Notfallbetriebssituation, in der lediglich die elektrische Ansteuerung des Aktuators 48 ausgefallen ist und in der trotz dieses Defekts eine hinreichende Bremskrafterzeugung durch den erfindungsgemäßen Bremskrafterzeuger 10 gewährleistet ist, ist eine weitere Notfallbetriebssituation zu betrachten, in der zusätzlich oder alternativ zu einem Defekt in der Ansteuerung des Aktuators 48 auch ein Defekt auftritt, der die Funktionsweise der Kammeranordnung 16 beeinträchtigt Beispielsweise könnte ein derartiger Defekt dadurch entstehen, dass die Vakuumpumpe 156 aus Figur 1 nicht mehr ordnungsgemäß arbeitet. Dies hätte zur Folge, dass in den Unterdruckkammern 30 und 36 kein Unterdruck mehr erzeugt werden kann, so dass an den beweglichen Wänden 28 und 40 auch keine Druckdifferenz mehr aufgebaut werden kann, die zu einer Bremskrafterzeugung und letztendlich zur Verlagerung von Primärkolben 64 und Sekundärkolben 130 genutzt werden kann.

Der erfindungsgemäße Bremskrafterzeuger 10 ist derart ausgebildet, dass er auch in einer derartigen Notfallbetriebssituation eine hinreichende Erzeugung einer Bremskraft ermöglicht. Bezugnehmend auf Figur 3 verhält sich der Bremskrafterzeuger 10 dabei wie folgt: Bei einer Betätigung des Bremspedals wird wiederum das Krafteingangsglied 14 in Richtung der Längsachse A verschoben. Trotz dieser Verlagerung des Krafteingangsglieds 14 lässt sich aber aufgrund des Ausbleibens einer Druckdifferenz in der Kammeranordnung zwischen den Unterdruckkammern 30 und 36 und den Arbeitskammern 32 und 38 mit der Kammeranordnung 16 keine Bremskraft erzeugen. Der Positionssensor 140 erfasst somit, dass sich die bewegliche Wand 40 trotz der Pedalbetätigung nicht bewegt und meldet dies umgehend an die elektronische Steuereinheit 154. Aufgrund dieses Signals detektiert die elektronische Steuereinheit 154 eine Notfallbetriebssituation und belässt das Trennventil 82 in seiner Passivstellung, so dass die Pedalgegenkraft-Simulationseinrichtung 106 wirkungslos bleibt. Wiederum ist die Drosselwirkung der Drosselblende 99 davon jedoch nicht betroffen. Auch eine Ansteuerung des Aktuators 48 ist nicht erforderlich und bleibt aus.

Aufgrund der Bewegung des Krafteingangsglieds 14 in axialer Richtung wird in Folge zunächst das Sicherheitsspiel s aufgebraucht, so dass das Koppelelement 56 in Kontakt mit dem Anker 50 tritt. Bei einer weiteren Bewegung des Krafteingangsglieds 14 in axialer Richtung wird der Anker 50 zusammen mit dem Koppelelement 56 von dem Krafteingangsglied 14 weiter verlagert, bis der Anker 50 schließlich in Anlage mit dem in Figur 3 rechten Bereich der Verbindungsbuchse 44 gerät. Nun ist das Krafteingangsglied 14 über das Koppelelement 56, den Anker 50 und die Verbindungsbuchse 54 kraftübertragend mit dem Primärzylinder 64 gekoppelt. Dadurch lässt sich der Primärzylinder 64 bei einer weiteren Bewegung des Krafteingangsglieds 14 innerhalb des Zylindergehäuses 18 verlagern, so dass sich in der Primärdruckkammer 132 und in der Sekundärdruckkammer 134 ein Bremsdruck aufbaut, mit dem sich das Fahrzeug adäquat abbremsen lässt. Der erfindungsgemäße Bremskrafterzeuger 10 bietet also auch für diese zweite Notfallbetriebssituation eine Möglichkeit, eine hinreichend große Bremskraft zu erzeugen, indem er eine unmittelbare Übertragung der an dem Bremspedal erzeugten Betätigungskraft auf den Primärkolben 64 ermöglicht. Der Fahrer kann in dieser Notfallbetriebssituation das Bremspedal derart durchtreten, dass seine Pedalbetätigungskraft unmittelbar auf den Primärzylinder 64 übertragen wird. Man spricht in diesem Zusammenhang auch von einer Push-Through-Funktion.

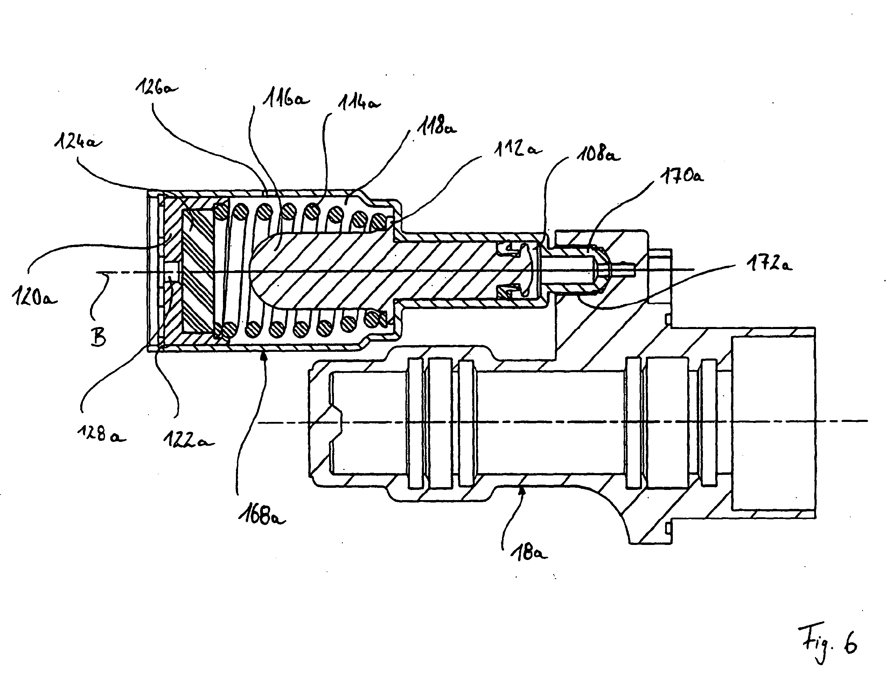

Im Folgenden soll kurz auf Figur 6 eingegangen werden. Figur 6 zeigt eine zweite Ausführungsform der Pedalgegenkraft-Simulationseinrichtung. Zur Erleichterung der Beschreibung und zur Vermeidung von Wiederholungen werden für gleichartige oder gleichwirkende Komponenten dieselben Bezugszeichen wie bei der Beschreibung von Figur 5 verwendet, jedoch mit dem Buchstaben "a" nachgestellt.

Das Ausführungsbeispiel gemäß Figur 6 unterscheidet sich von dem Ausführungsbeispiel gemäß Figur 5 lediglich darin, dass die Hydraulikkammer 108a, der Simulationskolben 110a, die Simulationsfeder 114a, die gummielastische Anschlagscheibe 124a und der Verschlussstopfen 120a in einem separaten Gehäuse 168a angeordnet und als vormontierte Baugruppe ausgebildet sind, wobei das Gehäuse 168a über ein Gewindeanschlussstück 170a in eine korrespondierende Aufnahmeöffnung 172a des Gehäuses 18a dicht eingeschraubt ist.

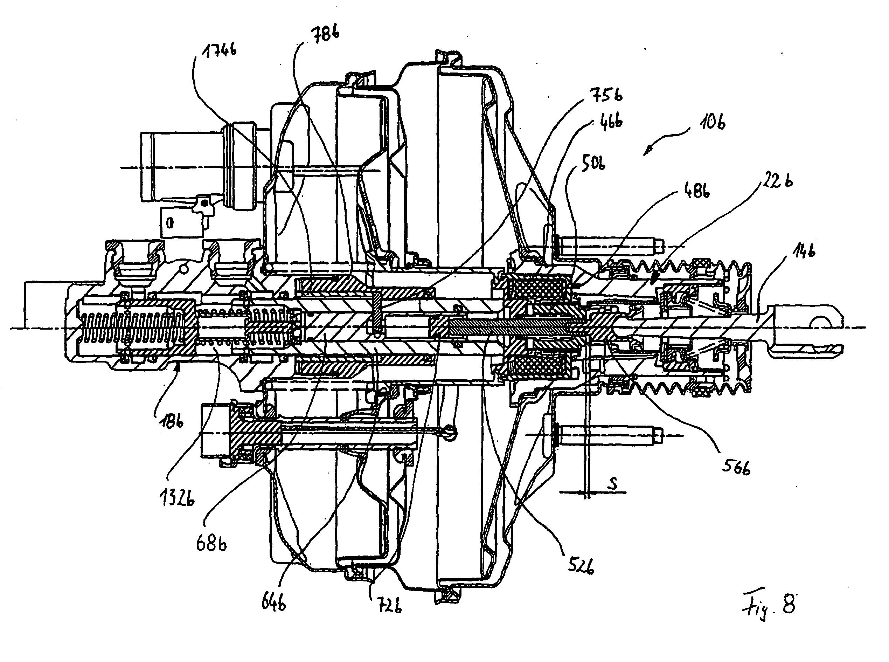

Figur 8 zeigt eine weitere Ausführungsform des erfindungsgemäßen Bremskrafterzeugers. Zur Vermeidung von Wiederholungen sollen wiederum lediglich die Unterschiede zu der Ausführungsform gemäß Figuren 3 und 4 beschrieben werden, wobei für gleichartige oder gleichwirkende Komponenten wiederum dieselben Bezugszeichen wie vorangehend bei der Beschreibung von Figuren 3 und 4 verwendet werden, jedoch mit dem Buchstaben "b" nachgestellt.

Die Ausführungsform gemäß Figur 8 unterscheidet sich von der Ausführungsform gemäß Figur 3 lediglich darin, dass der Anschlagstift 75b in der Verschlusshülse 78b durch eine Klemmhülse 174b festgelegt ist, wobei die Klemmhülse fest in dem durchmessergrößeren Abschnitt der abgestuften Innenbohrung der Verschlusshülse 78b verankert ist. Dadurch lässt sich der Anschlagstift 75b nicht gegenüber dem Gehäuse 18b verlagern.

Die Ausführungsform gemäß Figur 8 eignet sich insbesondere für den Anwendungsfall des erfindungsgemäßen Bremskrafterzeugers 10b, in dem regenerativ gebremst werden soll. Dies bedeutet, dass der Bremskrafterzeuger 10b in einem Fahrzeug eingesetzt wird, das die beim Bremsen freiwerdende Energie zumindest teilweise über einen Generator zurückgewinnt. Derartige Einsatzbedingungen herrschen insbesondere bei Hydridfahrzeugen, bei denen das Fahrzeug sowohl mittels eines Elektromotors als auch mittels eines Verbrennungsmotors betriebssituationsabhängig angetrieben werden kann. Der Generator erzeugt während der Bremsung einen Teil der für den Elektromotorbetrieb erforderlichen Energie, die in einem Akkumulator zwischengespeichert wird. Ferner können regenerative Bremssysteme auch in mit Brennstoffzellen betriebenen Fahrzeugen eingesetzt werden, in denen ebenfalls elektrische Energie für Reformationsprozesse oder dergleichen bereitgestellt werden muss.

Bei derartigen regenerativen Bremssystemen wird der Generator im Falle einer Bremsung, d. h. bei einer Bremspedalbetätigung, zumindest über die angetriebenen Räder angetrieben. Die hierfür erforderliche Energie dient zur Verzögerung des Fahrzeugs. Reicht diese Verzögerung jedoch nicht aus, um das Fahrzeug entsprechend dem Bremswunsch des Fahrers abzubremsen, so ist es erforderlich, wie bei herkömmlichen Bremssystemen, zusätzlich eine Bremskraft über das Bremssystem zu erzeugen. Setzt man den erfindungsgemäßen Bremskrafterzeuger 10b in einem derartigen regenerativen Bremssystem ein, so stellt sich allerdings das Problem, dass der Bremskrafterzeuger 10b bei einer Bremspedalbetätigung und einer daraus resultierenden Verlagerung des Krafteingangsglieds 14b zunächst keine Bremskraft erzeugen muss. Eine Bremskrafterzeugung durch den Bremskrafterzeuger 10b ist beispielsweise so lange nicht erwünscht, solange die durch den zugeschalteten Generator erzielbare Verzögerung der durch den Fahrerwunsch vorgegebenen Sollverzögerung genügt. Erst wenn diese Bedingung nicht mehr erfüllt ist, muss der Bremskrafterzeuger 10b eine zusätzliche Bremskraft erzeugen. Dies bedeutet, dass erst dann der Aktuator 48b aktiviert und in der Folge das Steuerventil 22b wie vorstehend mit Bezug auf Figur 3 und folgende geschildert angesteuert werden muss, wenn eine reine Generatorbremsung nicht mehr ausreicht. Bevor eine solche Ansteuerung des Steuerventils und eine daraus resultierende Bremskrafterzeugung erfolgt, wird eine Verlagerung des Krafteingangsglieds 14b lediglich über das Koppelelement 56b, den Übertragungskolben 52b und den Trennkolben 72b zu der Pedalgegenkraft-Simulationseinrichtung übertragen, die der Pedalbetätigung eine für den Fahrer gewohnte Widerstandskraft entgegensetzt. Da zunächst keine Verlagerung des Ankers 50b innerhalb der Spule 46b erfolgen soll, sich das Koppelelement 56b jedoch bedingt durch die Bewegung des Krafteingangsglieds 14b in Figur 8 nach links bewegt, ist das Sicherheitsspiel s ausreichend groß zu bemessen, um eine unerwünschte mechanische Kopplung von Koppelelement 56b und Anker 50b auszuschließen.

Die Klemmhülse 174b ist deshalb erforderlich, weil sich andernfalls der Betätigungskolben 68b unter der Wirkung des Koppelelements 56b, des Übertragungskolbens 52b und des Trennkolbens 72b innerhalb des Primärkolbens 64b in die Primärdruckkammer 132b hineinverlagern könnte und somit in dieser Phase der Bremsung unerwünscht Bremsdruck in der Primärdruckkammer 132b erzeugen könnte.

Im Anschluss an die reine Generatorbremsung muss dann ein fließender Übergang in einen Zustand erfolgen, in dem sowohl mittels des Generators als auch mittels der über den Bremskrafterzeuger 10b erzeugten Bremskraft gebremst wird. Um diesen Übergang möglichst ruckfrei zu gestalten, kann der erfindungsgemäße vorab Bremskrafterzeuger 10b in eine Bereitschaftsstellung gefahren werden, in welcher alle Leerwege der Anordnung bereits aufgebraucht sind.

Im Übrigen funktioniert der erfindungsgemäße Bremskrafterzeuger 10b so, wie vorstehend mit Bezug auf Figuren 1 bis 6 geschildert. Dies gilt ebenso für die diskutierten Notfallbetriebssituationen, zu denen auch ein Ausfall des Generators zu zählen ist.

Bei einem alternativen Anwendungsfall der Bremskrafterzeuger 10 und 10b wird bei einer Bremsung von Anfang an zusätzlich zu der Generatorbremsung auch der Bremskrafterzeuger angesteuert. Die Verzögerungswirkung der Generatorbremsung wird dabei in der Pedalbetätigungs-Bremskrafterzeugungs-Kennlinie der Ansteuerung des Bremskrafterzeugers berücksichtigt. Dadurch kann erreicht werden, dass ein vom Fahrer unter Umständen spürbarer Übergang von einer reinen Generatorbremsung zu einer kombinierten Generator- und Bremssystembremsung unterbunden wird. Eine derart zeitlich parallele Durchführung von Generator- und Bremssystembremsung kann beispielsweise dadurch erfolgen, dass der Generator die Räder der einen Fahrzeugachse verzögert und das Bremssystem zunächst nur die Räder der anderen Fahrzeugachse verzögert, bis das Bremssystem schließlich - ab einem bestimmten durch die Pedalbetätigung vorgegebenen Verzögerungsgrenzwert - an allen vier Rädern des Fahrzeugs angreift und diese verzögert.

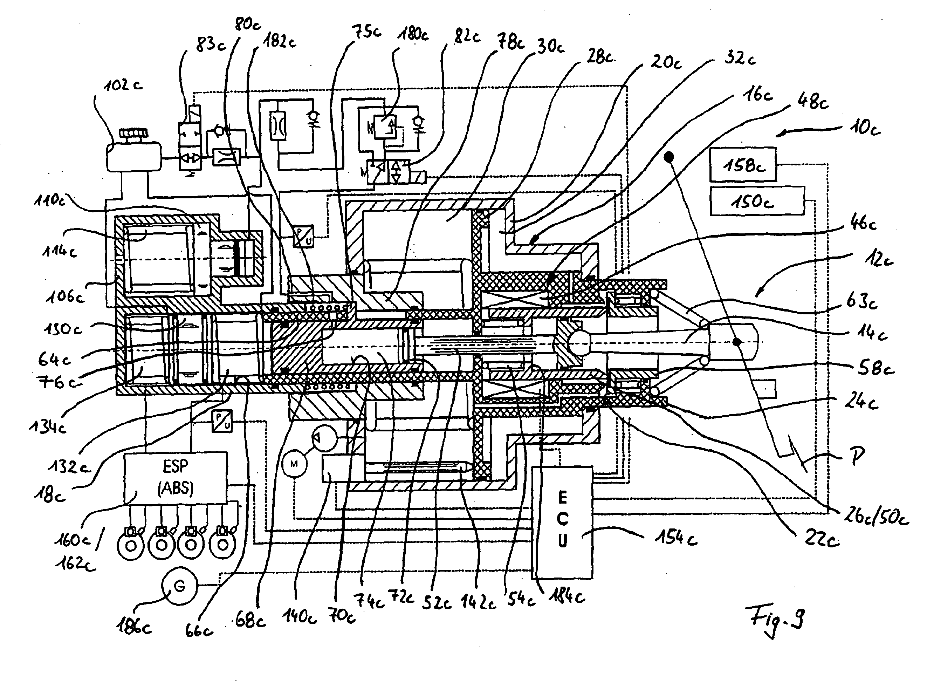

Figur 9 zeigt eine weitere Ausführungsform des erfindungsgemäßen Bremskrafterzeugers. Zur Vermeidung von Wiederholungen sollen wiederum lediglich die Unterschiede zu den Ausführungsformen gemäß Figuren 3 und 4 sowie 8 beschrieben werden, wobei für gleichartige oder gleichwirkende Komponenten wiederum dieselben Bezugszeichen wie vorangehend bei der Beschreibung von Figuren 3 und 4 sowie 8 verwendet werden, jedoch mit dem Buchstaben "c" nachgestellt.

Die Ausführungsform gemäß Figur 9 unterscheidet sich von der Ausführungsform gemäß Figur 3 im Wesentlichen in den folgenden Aspekten:

Die in Fig. 9 schematisch gezeigte Ausführungsform ist im Gegensatz zu den vorangehend diskutierten Ausführungsformen aus Gründen einer vereinfachten Darstellung nicht mit einer Kammeranordnung in Tandemausführung ausgebildet, sondern mit lediglich einer beweglichen Wand 28c.

Ein weiterer wesentlicher Unterschied zu der vorangehend beschriebenen Ausführungsform gemäß Fig. 8 liegt bei der Ausführungsform gemäß Figur 9 darin, dass der Anschlagstift 75c nicht über eine Spanhülse (beispielsweise 174b) relativ zu dem Zylindergehäuse 18c festgelegt ist und somit eine Bewegung des Betätigungskolbens 68c gegenüber dem Zylindergehäuse 18c blockiert ist. Vielmehr stützt sich bei dem Ausführungsbeispiel gemäß Figur 9 der Betätigungskolben 68c vermittels des Anschlagstifts 75c über ein Federelement 182c an dem Zylindergehäuse 18c unter Federvorspannung in Figur 9 nach links ab und liegt über den Anschlagstift 75c an einer Durchmesserstufe in der Verschlusshülse 78c an. Durch die Bereitstellung des Federelements 182c ist es möglich, das bei den vorangehend beschriebenen Ausführungsbeispielen vorgesehene Sicherheitsspiel s wegzulassen, das in den geschilderten Notbetriebssituationen überwunden werden muss, bis eine mechanische Übertragung der von dem Fahrer eines Fahrzeugs aufgebrachten Pedalbetätigungskraft auf das Bremssystem zur Erzeugung einer Bremskraft erfolgt.

Figur 9 zeigt ferner schematisch einen Generator, der zur Generatorbremsung ausgenutzt werden kann.

Das in Fig. 9 schematische gezeigte Bremssystem funktioniert wie folgt:

In einer ersten Phase einer Bremsung, in der eine Generatorbremsung durchgeführt werden soll, bleiben zunächst der Vakuum-Bremskrafterzeuger 10c sowie der angeschlossene Hauptbremszylinder innerhalb des Zylindergehäuses 18c passiv. Bei einer Betätigung des Bremspedals P wird die Bewegung des Krafteingangsglieds 14c über den Übertragungskolben 52c und den Trennkolben 72c unter Vermittlung des vorstehend beschriebenen hydraulischen Systems zu der Pedalgegenkraft-Simulationseinrichtung 106 übertragen, welche für eine für den Fahrer gewohnte Gegenkraft sorgt. Dabei ist das Trennventil 82c durch aktive Ansteuerung in seine geöffnete Stellung geschaltet, so dass es das Hydraulikfluid ungehindert hindurchströmen lässt. Ein weiteres Trennventil 83c wird derart angesteuert, dass es das Reservoir 102c von dem übrigen Hydraulikkreis trennt.

Das Federelement 182c ist so ausgelegt, dass es bei einer derartigen Betriebssituation eine Bewegung des Betätigungskolbens 68c verhindert und diesen in der in Fig. 9 gezeigten Stellung hält. Dadurch kann verhindert werden, dass in der Primärdruckkammer 132c sowie in der Sekundärdruckkammer 134c jeweils Bremsdruck aufgebaut wird.

In einer zweiten Phase der Bremsung, in der die reine Generatorbremsung nicht mehr ausreicht, um die gewünschte Verzögerung des Fahrzeugs zu erreichen, ist es erforderlich, zusätzlich über den Primärkolben 64c und den Sekundärkolben 130c in der Primärdruckkammer 132c und in der Sekundärdruckkammer 134c Bremsdruck aufzubauen. Dies wird dadurch erreicht, dass die elektronische Steuereinheit 154c zusätzlich den Aktuator 48c ansteuert, so dass das Steuerventil 22c geöffnet werden kann und dadurch der Bremskrafterzeuger 10c zusätzlich aktiviert werden kann. Diese zweite Phase der Bremsung ist dadurch charakterisiert, dass sowohl die Bremswirkung des Generators als auch die Bremswirkung der durch den Bremsdruck angesteuerten Reibungsbremseinheiten ausgenutzt wird, um die gewünschte Verzögerung des Fahrzeugs zu erzielen.

In einer Bremssituation, in der das Bremssystem nicht ordnungsgemäß funktioniert, beispielsweise weil die Stromversorgung in dem Fahrzeug ausgefallen ist, geschieht folgendes: aufgrund der mangelnden Stromversorgung verbleiben die beiden Trennventile 82c und 83c in ihren in Fig.9 gezeigten Passivstellungen. In diesen Stellungen muss das Hydraulikfluid ein Druckbegrenzungsventil 180c durchströmten, bevor es unter Umgehung der Pedalgegenkraft-Simulationseinrichtung 106c in das Reservoir 102c strömen kann. Dabei ist das Druckbegrenzungsventil 180c derart ausgelegt, dass es erst ab einem bestimmten Mindestdruck öffnet. Dadurch kann erreicht werden, dass das Hydraulikfluid aus der Hydraulikkammer 74c zunächst nicht ausströmen kann, sodass die Bewegung des Krafteingangsglieds 14c über den Übertragungskolben 52c unmittelbar auf den Betätigungskolben 68c und von diesem über den Anschlagstift 75c auf den Primärkolben 64c übertragen wird. Dadurch kann erreicht werden, dass ohne das Erfordernis der Überwindung eines Sicherheitsspiels die Bewegung des Krafteingangsglied 14c unmittelbar zur Bremskrafterzeugung ausgenutzt wird. Dabei wird das Federelement 182c komprimiert. Sobald der Hydraulikdruck in der Hydraulikkammer 74c den Mindestdruck des Druckbegrenzungsventils 180c übersteigt, öffnet dieses und ermöglicht ein Ausströmen von Hydraulikfluid aus der Hydraulikkammer 74c. In der Folge tauchen der Trennkolben 72c sowie der Übertragungskolben 52c weiter in den Betätigungskolben 68c ein. Es kommt daher auch zu einer Relativbewegung zwischen dem in Fig. 9 rechten Ende des Übertragungskolbens 52c und der Ventilhülse 26c. Bei hinreichend intensiver Pedalbetätigung legt sich schließlich das durchmessergroße rechte Ende des Übertragungskolbens 52c an die Anschlagschulter 184c an, die integral an der Ventilhülse 26c angebracht ist, so dass die Ventilhülse 26c unmittelbar kraftübertragend mit dem Übertragungskolben 52c gekoppelt ist. Jede weitere Bewegung des Übertragungskolbens 52c wird in der Folge unmittelbar auf die Ventilhülse 26c übertragen. Somit kann das Steuerventil 22c geöffnet werden und die Druckdifferenz - sofern noch vorhanden - zwischen der Unterdruckkammer 30c und der Arbeitskammer 32c trotz Stromausfalls zur Unterstützung der Bremskrafterzeugung ausgenutzt werden.

## Patentansprüche

1. Bremskrafterzeuger (10) für eine hydraulische Fahrzeugbremsanlage mit
- einem Krafteingangsglied (14), das mit einem Bremspedal (P) koppelbar oder gekoppelt und in einem Basisgehäuse des Bremskrafterzeugers (10) verlagerbar ist,
- einem Hauptbremszylinder mit einem Zylindergehäuse (18), in dem ein Primärkolben (64) verlagerbar geführt ist, wobei der Primärkolben (64) mit dem Hauptbremszylinder eine Primärdruckkammer (132) zur Erzeugung eines hydraulischen Bremsdrucks begrenzt,
- einer Pedalgegenkraft-Simulationseinrichtung (106),
- einer Pedalbetätigungs-Erfassungseinrichtung (150) zum Erfassen einer Pedalbetätigung und
- einer Betätigungskraft-Erzeugungseinrichtung zum Ausüben einer Betätigungskraft auf den Primärkolben (64),
wobei die Betätigungskraft-Erzeugungseinrichtung ein Steuerventil (22), eine Kammeranordnung (16) und einen elektromagnetischen Aktuator (48) aufweist, wobei die Kammeranordnung (16) mit einer Unterdruckkammer (30) und einer von der Unterdruckkammer (30) durch eine bewegliche Wand (28) getrennte und über das Steuerventil (22) fluidisch miteinander verbindbare Arbeitskammer (32) ausgebildet ist und wobei das Steuerventil (22) nach Maßgabe der erfassten Pedalbetätigung durch den elektromagnetischen Aktuator (48) zum Erzielen einer die Betätigungskraft bestimmenden Druckdifferenz zwischen der Arbeitskammer (32) und der Unterdruckkammer (30) ansteuerbar ist
**dadurch gekennzeichnet, dass** die Pedalgegenkraft-Simulationseinrichtung (106) über ein Pedalgegenkraft-Hydrauliksystem (74, 80, 82, 108), das eine Dämpferanordnung (110, 114, 124) aufweist, mit dem Krafteingangsglied (14) kraftübertragend koppelbar ist, wobei die Dämpferanordnung (110, 114, 124) in dem Zylindergehäuse (18) integriert oder als separate Baugruppe an diesem angebracht ist.

2. Bremskrafterzeuger (10) nach Anspruch 1,
**dadurch gekennzeichnet, dass** die gegenwärtige Lage der beweglichen Wand (28, 40) mittels eines Positionssensors (140) erfasst wird.

3. Bremskrafterzeuger (10) nach Anspruch 1 oder 2,
**dadurch gekennzeichnet, dass** die Pedalbetätigungs-Erfassungseinrichtung (150) einen Sensor zur Erfassung einer aktuellen Auslenkung des Bremspedals (P), insbesondere einen an einer Drehachse des Bremspedals (P) angeordneten Drehwinkelsensor, aufweist.

4. Bremskrafterzeuger (10) nach einem der vorangehenden Ansprüche,
**dadurch gekennzeichnet, dass** die Unterdruckkammer (32, 38) zur Erzeugung eines Unterdrucks mit dem Ansaugtrakt eines Verbrennungsmotors oder mit einer Vakuumpumpe (156) fluidisch verbunden ist.

5. Bremskrafterzeuger (10) nach einem der vorangehenden Ansprüche,
**dadurch gekennzeichnet, dass** der elektromagnetische Aktuator (48) eine an dem Steuerventilgehäuse (24) festgelegte Spule (46) und einen vermittels der Spule (46) relativ zu dieser verlagerbaren magnetischen Anker (50) aufweist.

6. Bremskrafterzeuger (10) nach einem der vorangehenden Ansprüche, insbesondere nach Anspruch 5,
**dadurch gekennzeichnet, dass** das Steuerventil (22) ein relativ zu dem Basisgehäuse (20) verlagerbares Steuerventilgehäuse (24) und ein relativ zu dem Steuerventilgehäuse (24) verlagerbares Steuerventilelement (58) aufweist, wobei an dem Steuerventilgehäuse (24) ein in dichtende Anlage mit dem Steuerventilelement (58) bringbarer Gehäusedichtsitz (62) vorgesehen ist, wobei weiter mit dem elektromagnetischen Aktuator (48), insbesondere mit dessen Anker (50), eine Steuerventilhülse (26) gekoppelt ist, an der ein in dichtende Anlage mit dem Steuerventilelement (58) bringbarer Hülsendichtsitz (60) vorgesehen ist.

7. Bremskrafterzeuger (10) nach Anspruch 6,
**dadurch gekennzeichnet, dass** bei dichtem Anliegen von Steuerventilelement (58) und Hülsendichtsitz (60) und gleichzeitig voneinander getrenntem Steuerventilelement (58) und Gehäusedichtsitz (62) die Arbeitskammer mit der Unterdruckkammmer fluidisch verbunden ist und dass bei dichtem Anliegen von Steuerventilelement (58) und Gehäusedichtsitz (62) und bei gleichzeitig voneinander getrenntem Steuerventilelement (58) und Hülsendichtsitz (60) zum Aufbau eines Differenzdrucks zwischen der Arbeitskammer (32, 38) und der Unterdruckkammer (30, 36) die Arbeitskammer (32, 38) mit der Umgebungsatmosphäre fluidisch verbunden ist.

8. Bremskrafterzeuger (10) nach Anspruch 5 und einem der vorangehenden Ansprüche,
**dadurch gekennzeichnet, dass** zwischen dem Krafteingangsglied (14) und einer das Steuerventil (22) betätigenden Komponente, insbesondere dem Anker (50), ein Sicherheitsspiel (s) vorgesehen ist, das bei ausbleibender Verlagerung des Ankers (50) durch die Spule (46) trotz Betätigung des Bremspedals überwunden wird, so dass die das Steuerventil (22) betätigende Komponente, insbesondere der Anker (50), mit dem Krafteingangsglied (14) kraftübertragend koppelbar ist, wobei eine durch eine Bremspedalbetätigung induzierte weitere Verlagerung des Krafteingangsglieds (14) unmittelbar auf die das Steuerventil (22) betätigende Komponente, insbesondere den Anker (50), und in der Folge auf das Steuerventilgehäuse (24) übertragen wird.

9. Bremskrafterzeuger (10) nach einem der vorangehenden Ansprüche,
**dadurch gekennzeichnet, dass** die Kammeranordnung (16) als Tandem-Kammeranordnung mit einer ersten Kammeranordnung und einer von dieser getrennten zweiten Kammeranordnung ausgebildet ist, wobei die erste Kammeranordnung eine erste Unterdruckkammer (32) und eine von dieser durch eine erste bewegliche Wand (28) getrennte erste Arbeitskammer (30) aufweist, wobei weiter die zweite Kammeranordnung eine zweite Unterdruckkammer (36) und eine von dieser durch eine zweite bewegliche Wand (40) getrennte zweite Arbeitskammer (38) aufweist, wobei die erste und zweite Kammeranordnung über das Steuerventil (22) mit Druck beaufschlagbar sind.

10. Bremskrafterzeuger (10) nach Anspruch 9,
**dadurch gekennzeichnet, dass** die erste bewegliche Wand (28) und die zweite bewegliche Wand (40) zum Zwecke einer gemeinsamen Bewegung miteinander, vorzugsweise starr, gekoppelt sind.

11. Bremskrafterzeuger (10) nach einem der vorangehenden Ansprüche,
**dadurch gekennzeichnet, dass** das Krafteingangsglied (14) über eine Übertragungskolbenanordnung (52, 56, 76) mit der Pedalgegenkraft-Simulationseinrichtung (106) gekoppelt ist.

12. Bremskrafterzeuger (10) nach einem der vorangehenden Ansprüche,
**dadurch gekennzeichnet, dass** die Dämpferanordnung eine über einen durch das Pedalgegenkraft-Hydrauliksystem (74, 80, 82, 108) verlagerbaren Kraftkolben (110) komprimierbare Simulationsfeder (114) oder/und fluidische Dämpfungsmittel, vorzugsweise eine Drossel (126), oder/und eine gummielastische Anschlagscheibe (124) aufweist.

13. Bremskrafterzeuger (10) nach einem der vorangehenden Ansprüche,
**dadurch gekennzeichnet, dass** das Pedalgegenkraft-Hydrauliksystem mit einem ansteuerbaren Trennventil (82) ausgebildet ist, das in einer ersten Stellung, vorzugsweise in seiner Passivstellung, die Dämpferanordnung und die Übertragungskolbenanordnung hydraulisch voneinander entkoppelt und eine im Wesentlichen ungedämpfte Bewegung der Übertragungskolbenanordnung zulässt und das in einer zweiten Stellung, vorzugsweise seiner Aktivstellung, die Dämpferanordnung und die Übertragungskolbenanordnung hydraulisch miteinander koppelt.

14. Bremskrafterzeuger (10) nach Anspruch 13,
**dadurch gekennzeichnet, dass** das Trennventil (82) mit einem Drosselelement (105), vorzugsweise mit einer federvorgespannten Drosselblende, versehen ist, welche in der Aktivstellung des Trennventils (82) eine Hydraulikfluid-Strömung zu der Dämpferanordnung drosselt.

15. Bremskrafterzeuger (10) nach Anspruch 13 oder 14,
**dadurch gekennzeichnet, dass** das Trennventil (82) zu Beginn einer Bremspedalbetätigung aus seiner Passivstellung in seine Aktivstellung geschaltet wird und die Ansteuerung erst nach Beendigung der Bremspedalbetätigung aus seiner Aktivstellung in seine Passivstellung geschaltet wird.

16. Bremskrafterzeuger (10) nach einem der vorangehenden Ansprüche,
**dadurch gekennzeichnet, dass** der Hauptbremszylinder in einem Zylindergehäuse (18), vorzugsweise als einseitig offene Zylinderbohrung (66), ausgebildet ist.

17. Bremskrafterzeuger (10) nach Anspruch 16,
**dadurch gekennzeichnet, dass** das Zylindergehäuse (18) zusammen mit den darin angeordneten Komponenten als Baugruppe in das Basisgehäuse (20) einschiebbar und mit diesem lösbar verbunden ist.

18. Bremskrafterzeuger (10) nach einem der vorangehenden Ansprüche,
**dadurch gekennzeichnet, dass** in dem Hauptbremszylinder ein Sekundärkolben (130) verlagerbar geführt ist, dass der Sekundärkolben (130) mit dem Hauptbremszylinder eine Sekundärdruckkammer (134) zur Erzeugung eines hydraulischen Bremsdrucks einschließt, und dass der Primärkolben (64) mit dem Hauptbremszylinder und dem Sekundärkolben (130) zur Erzeugung eines hydraulischen Bremsdrucks die Primärdruckkammer (132) einschließt.

19. Bremskrafterzeuger (10) nach Anspruch 18,
**dadurch gekennzeichnet, dass** der Primärkolben (64) und gegebenenfalls der Sekundärkolben (130) vermittels diesen zugeordneten Vorspannfedern (136, 138) jeweils in eine Ausgangsstellung vorgespannt sind.

20. Bremskrafterzeuger (10) nach Anspruch 11 und einem der vorangehenden Ansprüche,
**dadurch gekennzeichnet, dass** der Primärkolben (64) mit einer Durchgangsbohrung versehen ist, in der ein Betätigungskolben (68) geführt ist, wobei der Betätigungskolben (68) eine Betätigungszylinderbohrung (70) aufweist, in der ein Trennkolben (72) geführt und vermittels der Übertragungskolbenanordnung (52, 56) verlagerbar ist, wobei der Trennkolben (72) in dem Betätigungskolben (68) eine Hydraulikfluidkammer (74) begrenzt, die fluidisch mit dem Hydrauliksystem der Pedalgegenkraft-Simulationseinrichtung (106) gekoppelt ist.

21. Bremskrafterzeuger (10) nach Anspruch 20,
**dadurch gekennzeichnet, dass** eine den Trennkolben (72) kontaktierende Komponente (54) der Übertragungskolbenanordnung mit dem Trennkolben (72) magnetisch oder/und adhesiv oder/und durch Verrastung lösbar gekoppelt ist.

22. Bremskrafterzeuger (10) nach Anspruch 20 oder 21,
**dadurch gekennzeichnet, dass** der Betätigungskolben (68) relativ zu dem Zylindergehäuse (18) festgelegt ist.

23. Bremskrafterzeuger (10c) nach Anspruch 20 oder 21,
**dadurch gekennzeichnet, dass** der Betätigungskolben (68c) relativ zu dem Zylindergehäuse (18c) verlagerbar ist.

24. Bremskrafterzeuger (10c) nach Anspruch 23,
**dadurch gekennzeichnet, dass** der Betätigungskolben (68c) gegen die Wirkung eines Federelements (182c) relativ zu dem Zylindergehäuse (18c) verlagerbar ist.

25. Bremskrafterzeuger (10c) nach Anspruch 24,
**dadurch gekennzeichnet, dass** zur Kopplung von Betätigungskolben (68c) und Federelement (182c) ein an dem Betätigungskolben (68c) angebrachter Anschlagstift (75c) dient.

26. Bremskrafterzeuger (10) nach einem der vorangehenden Ansprüche, **gekennzeichnet durch** eine elektronische Steuereinrichtung (154), die die Pedalbetätigungs-Erfassungseinrichtung (150) überwacht, und den elektromagnetischen Aktuator (48) nach Maßgabe eines Ausgangssignals der Pedalbetätigungs-Erfassungseinrichtung (150), vorzugsweise unter Berücksichtigung einer vorgegebenen Kennlinie oder eines vorgegebenen Kennlinienfeldes, ansteuert.

27. Bremskrafterzeuger (10) nach Anspruch 26,
**dadurch gekennzeichnet, dass** die elektronische Steuereinrichtung (154) mit dem elektromagnetischen Aktuator (48) verbunden ist und diesen nach Maßgabe eines im Hydrauliksystem der Pedalgegenkraft-Simulationseinrichtung (106), beispielsweise am Trennventil (82), erfassten Hydraulikdrucks ansteuert.

28. Bremskrafterzeuger (10) nach Anspruch 27,
**dadurch gekennzeichnet, dass** die elektronische Steuereinrichtung (154) mit dem elektromagnetischen Aktuator (48) verbunden ist und diesen nach Maßgabe eines von einem Fahrzeugregelsystem ermittelten Parameters, wie beispielsweise dem Abstand zu einem voranfahrenden Fahrzeugs, dem gegenwärtigen Hydraulikdruck im Bremssystem, der aktuellen Verzögerung, oder dergleichen, ansteuert.

29. Bremskrafterzeuger (10) nach einem der Ansprüche 26 bis 28,
**dadurch gekennzeichnet, dass** die elektronische Steuereinrichtung (154) mit dem elektromagnetischen Aktuator (48) verbunden ist und diesen nach Maßgabe einer zeitlichen Änderung des Ausgangssignals der Pedalbetätigungs-Erfassungseinrichtung (150) oder/und des im Hydrauliksystem der Pedalgegenkraft-Simulationseinrichtung (106), beispielsweise am Trennventil (82), erfassten Hydraulikdrucks ansteuert.

30. Bremskrafterzeuger (10) nach einem der Ansprüche 26 bis 29,
**dadurch gekennzeichnet, dass** die Kennlinie oder das Kennlinienfeld fest vorgegeben oder an erfasste Betriebsparamter adaptierbar ist.

31. Bremskrafterzeuger (10) nach einem der Ansprüche 26 bis 30,
**dadurch gekennzeichnet, dass** die elektronische Steuereinrichtung (154) mit dem Trennventil (82) verbunden ist und dieses nach Maßgabe eines Ausgangssignals der Pedalbetätigungs-Erfassungseinrichtung (150) ansteuert.

32. Bremskrafterzeuger (10) nach einem der Ansprüche 26 bis 31,
**dadurch gekennzeichnet, dass** die elektronische Steuereinrichtung (154) mit dem elektromagnetischen Aktuator (48) verbunden ist und bei der Ansteuerung des elektromagnetischen Aktuators (48) ein Ausgangssignal des Positionssensors (140) berücksichtigt.

33. Bremssystem für ein Kraftfahrzeug mit einem Bremskrafterzeuger nach einem der vorangehenden Ansprüche.

34. Bremssystem nach Anspruch 33,
**dadurch gekennzeichnet, dass** das Kraftfahrzeug mit einem zur Verzögerung genutzten Generator ausgebildet ist und dass die bei Aktivierung des Generators erzielte Fahrzeugverzögerung bei der Ansteuerung des Bremskrafterzeugers berücksichtigt wird.

## Claims

1. Brake force generator (10) for a vehicle hydraulic brake system having
- a force input element (14), which is connectable or connected to a brake pedal (P) and displaceable in a base housing of the brake force generator (10),
- a master cylinder having a cylinder housing (18), in which a primary piston (64) is displaceably guided, wherein the primary piston (64) with the master cylinder delimits a primary pressure chamber (132) for generating a hydraulic brake pressure,
- a pedal counterforce simulating device (106),
- a pedal actuation detecting device (150) for detecting a pedal actuation and
- an actuating force generating device for exerting an actuating force on the primary piston (64),
wherein the actuating force generating device comprises a control valve (22), a chamber arrangement (16) and an electromagnetic actuator (48), wherein the chamber arrangement (16) is designed with a vacuum chamber (30) and a working chamber (32), which is separated from the vacuum chamber (30) by a movable wall (28) and is fluidically connectable to the vacuum chamber (30) by the control valve (22), and wherein the control valve (22) in accordance with the detected pedal actuation may be activated by the electromagnetic actuator (48) in order to achieve a pressure difference between working chamber (32) and vacuum chamber (30) that determines the actuating force
**characterized in that** the pedal counterforce simulating device (106) is workingly connectable to the force input element (14) by a pedal counterforce hydraulic system (74, 80, 82, 108), which comprises a damper arrangement (110, 114, 124), wherein the damper arrangement (110, 114, 124) is integrated in the cylinder housing (18) or provided as a separate module thereon.

2. Brake force generator (10) according to claim 1,
**characterized in that** the present position of the movable wall (28, 40) is detected by means of a position sensor (140).

3. Brake force generator (10) according to claim 1 or 2,
**characterized in that** the pedal actuation detecting device (150) comprises a sensor for detecting an actual deflection of the brake pedal (P), in particular an angle-of-rotation sensor disposed at an axis of rotation of the brake pedal (P).

4. Brake force generator (10) according to one of the preceding claims,
**characterized in that** the vacuum chamber (32, 38) for generating a vacuum is fluidically connected to the intake tract of an internal combustion engine or to a vacuum pump (156).

5. Brake force generator (10) according to one of the preceding claims,
**characterized in that** the electromagnetic actuator (48) comprises a coil (46) fastened to the control valve housing (24) as well as a magnetic armature (50) displaceable by means of the coil (46) relative to the coil.

6. Brake force generator (10) according to one of the preceding claims, in particular according to claim 5,
**characterized in that** the control valve (22) comprises a control valve housing (24) displaceable relative to the base housing (20) as well as a control valve element (58) displaceable relative to the control valve housing (24), wherein on the control valve housing (24) a housing sealing seat (62) movable into sealing abutment with the control valve element (58) is provided, wherein a control valve sleeve (26), on which a sleeve sealing seat (60) movable into sealing abutment with the control valve element (58) is provided, is further coupled to the electromagnetic actuator (48), in particular to the armature (50) thereof.

7. Brake force generator (10) according to claim 6,
**characterized in that**, given sealing abutment of control valve element (58) and sleeve sealing seat (60) and simultaneously mutually separate control valveelement (58) and housing sealing seat (62), the working chamber is fluidically connected to the vacuum chamber and that, given sealing abutment of control valve element (58) and housing sealing seat (62) and simultaneously mutually separate control valve element (58) and sleeve sealing seat (60), for building up a pressure difference between working chamber (32, 38) and vacuum chamber (30, 36) the working chamber (32, 38) is fluidically connected to the ambient atmosphere.

8. Brake force generator (10) according to claim 5 and one of the preceding claims,
**characterized in that** between the force input element (14) and a component that actuates the control valve (22), in particular the armature (50), a safety clearance (s) is provided that, in the absence of displacement of the armature (50) by the coil (46) despite actuation of the brake pedal, is overcome so that the component that actuates the control valve (22), in particular the armature (50), is workingly connectable to the force input element (14), wherein a further displacement of the force input element (14) that is induced by a brake pedal actuation is transmitted directly to the component that actuates the control valve (22), in particular the armature (50), and hence to the control valve housing (24).

9. Brake force generator (10) according to one of the preceding claims,
**characterized in that** the chamber arrangement (16) is designed as a tandem chamber arrangement comprising a first chamber arrangement and a second chamber arrangement separate from the first, wherein the first chamber arrangement comprises a first vacuum chamber (32) and a first working chamber (30) separated by a first movable wall (28) from the first vacuum chamber (32), wherein moreover the second chamber arrangement comprises a second vacuum chamber (36) and a second working chamber (38) separated by a second movable wall (40) from the second vacuum chamber (36), wherein the first and second chamber arrangement may be pressurized by means of the control valve (22).

10. Brake force generator (10) according to claim 9,
**characterized in that** the first movable wall (28) and the second movable wall (40) for the purpose of joint movement are connected, preferably rigidly, to one another.

11. Brake force generator (10) according to one of the preceding claims,
**characterized in that** the force input element (14) is connected by a transmission piston arrangement (52, 56, 76) to the pedal counterforce simulating device (106).

12. Brake force generator (10) according to one of the preceding claims,
**characterized in that** the damper arrangement comprises a simulation spring (114), which is compressible by means of a force piston (110) displaceable by means of the pedal counterforce hydraulic system (74, 80, 82, 108), or/and fluid damping means, preferably a throttle (126), or/and a rubber-elastic stop washer (124).

13. Brake force generator (10) according to one of the preceding claims,
**characterized in that** the pedal counterforce hydraulic system is designed with a controllable block valve (82), which in a first position, preferably in its passive position, uncouples the damper arrangement and the transmission piston arrangement hydraulically from one another and allows a substantially undamped movement of the transmission piston arrangement and which in a second position, preferably its active position, connects the damper arrangement and the transmission piston arrangement hydraulically to one another.

14. Brake force generator (10) according to claim 13,
**characterized in that** the block valve (82) is provided with a throttle element (105), preferably with a spring-biased restrictor, which in the active position of the block valve (82) throttles a hydraulic fluid flow to the damper arrangement.

15. Brake force generator (10) according to claim 13 or 14,
**characterized in that** the block valve (82) at the start of a brake pedal actuation is switched from its passive position to its active position and the control circuit is not switched from its active position to its passive position until after completion of the brake pedal actuation.

16. Brake force generator (10) according to one of the preceding claims,
**characterized in that** the master cylinder is formed in a cylinder housing (18), preferably in the form of a cylinder bore (66) open at one end.

17. Brake force generator (10) according to claim 16,
**characterized in that** the cylinder housing (18) together with the components disposed therein is insertable as a module into the base housing (20) and releasably connected thereto.

18. Brake force generator (10) according to one of the preceding claims,
**characterized in that** in the master cylinder a secondary piston (130) is displaceably guided, that the secondary piston (130) with the master cylinder encloses a secondary pressure chamber (134) for generating a hydraulic brake pressure, and that the primary piston (64) with the master cylinder and the secondary piston (130) encloses the primary pressure chamber (132) for generating a hydraulic brake pressure.

19. Brake force generator (10) according to claim 18,
**characterized in that** the primary piston (64) and optionally the secondary piston (130) are biased in each case into a basic position by means of biasing springs (136, 138) associated therewith.

20. Brake force generator (10) according to claim 11 and one of the preceding claims,
**characterized in that** the primary piston (64) is provided with a through-bore, in which an actuating piston (68) is guided, wherein the actuating piston (68) has an actuating cylinder bore (70), in which a separating piston (72) is guided and is displaceable by means of the transmission piston arrangement (52, 56),
wherein the separating piston (72) in the actuating piston (68) delimits a hydraulic fluid chamber (74) that is fluidically connected to the hydraulic system of the pedal counterforce simulating device (106).

21. Brake force generator (10) according to claim 20,
**characterized in that** a component (54) of the transmission piston arrangement that contacts the separating piston (72) is releasably connected to the separating piston (72) magnetically or/and adhesively or/and by latching.

22. Brake force generator (10) according to claim 20 or 21,
**characterized in that** the actuating piston (68) is fixed relative to the cylinder housing (18).

23. Brake force generator (10c) according to claim 20 or 21,
**characterized in that** the actuating piston (68c) is displaceable relative to the cylinder housing (18c).

24. Brake force generator (10c) according to claim 23,
**characterized in that** the actuating piston (68c) is displaceable counter to the action of a spring element (182c) relative to the cylinder housing (18c).

25. Brake force generator (10c) according to claim 24,
**characterized in that** a stop pin (75c) provided on the actuating piston (68c) is used to connect actuating piston (68c) and spring element (182c).

26. Brake force generator (10) according to one of the preceding claims,
**characterized by** an electronic control device (154), which monitors the pedal actuation detecting device (150) and activates the electromagnetic actuator (48) in accordance with an output signal of the pedal actuation detecting device (150), preferably with due regard to a defined characteristic curve or a defined family of characteristics.

27. Brake force generator (10) according to claim 26,
**characterized in that** the electronic control device (154) is connected to the electromagnetic actuator (48) and activates said actuator in accordance with a hydraulic pressure that is detected in the hydraulic system of the pedal counterforce simulating device (106), for example at the block valve (82).

28. Brake force generator (10) according to claim 27,
**characterized in that** the electronic control device (154) is connected to the electromagnetic actuator (48) and activates said actuator in accordance with a parameter determined by a vehicle control system, such as for example the distance from a vehicle travelling in front, the present hydraulic pressure in the brake system, the actual deceleration, or the like.

29. Brake force generator (10) according to one of claims 26 to 28,
**characterized in that** the electronic control device (154) is connected to the electromagnetic actuator (48) and activates said actuator in accordance with a time rate of change of the output signal of the pedal actuation detecting device (150) or/and the hydraulic pressure detected in the hydraulic system of the pedal counterforce simulating device (106), for example at the block valve (82).

30. Brake force generator (10) according to one of claims 26 to 29,
**characterized in that** the characteristic curve or the family of characteristics is permanently defined or adaptable to detected operating parameters.

31. Brake force generator (10) according to one of claims 26 to 30,
**characterized in that** the electronic control device (154) is connected to the block valve (82) and activates said block valve in accordance with an output signal of the pedal actuation detecting device (150).

32. Brake force generator (10) according to one of claims 26 to 31,
**characterized in that** the electronic control device (154) is connected to the electromagnetic actuator (48) and, when activating the electromagnetic actuator (48), takes into account an output signal of the position sensor (140).

33. Brake system for a motor vehicle having a brake force generator according to one of the preceding claims.

34. Brake system according to claim 33,
**characterized in that** the motor vehicle is designed with a generator used for deceleration and that the vehicle deceleration achieved upon activation of the generator is taken into account when activating the brake force generator.

## Revendications

1. Générateur de force de freinage (10) pour un système de freinage hydraulique de véhicule, comprenant
- un organe d'entrée de force (14) qui peut être accouplé ou est accouplé à une pédale de frein (P) et peut se déplacer dans un dispositif boîtier du générateur de force de freinage (10),
- un maître-cylindre de frein avec un boîtier de cylindre (18), dans lequel un piston primaire (64) est guidé mobile, ledit piston primaire (64) délimitant avec le maître-cylindre de frein une chambre de pression primaire (132) conçue pour produire une pression de freinage hydraulique,
- un dispositif de simulation de force antagoniste de pédale (106),
- un dispositif de détection de force d'actionnement de pédale (150) conçu pour détecter un actionnement de la pédale et
- un dispositif de production de force d'actionnement conçu pour exercer une force d'actionnement sur le piston primaire (64),
ledit dispositif de production de force d'actionnement présentant une soupape de commande (22), un ensemble de chambres (16) et un actionneur électromagnétique (48), ledit ensemble de chambres (16) étant composé d'une chambre de dépression (30) et d'une chambre de travail (32) séparée par une paroi mobile (28) de la chambre de dépression (30) et pouvant être fluidiquement reliée à cette dernière par l'intermédiaire de la soupape de commande (22), et la soupape de commande (22) pouvant être commandée en fonction de l'actionnement de pédale détecté par l'actionneur électromagnétique (48) pour obtenir une différence de pression entre la chambre de travail (32 et la chambre de dépression (30), laquelle différence est déterminante pour la force d'actionnement,
**caractérisé en ce que** le dispositif de simulation de force antagoniste de pédale (106) peut être accouplé en transmission de force à l'organe d'entrée de force (14) par le biais d'un système hydraulique de force antagoniste de pédale (74, 80, 82, 108) qui présente un ensemble d'amortisseurs (110, 114, 124), ledit ensemble d'amortisseurs (110, 114, 124) étant intégré dans le boîtier de cylindre (18) ou monté sur ce dernier en tant que pièce distincte.

2. Générateur de force de freinage (10) selon la revendication 1,
**caractérisé en ce que** la position momentanée de la paroi mobile (28, 40) est détectée au moyen d'un capteur de position (140).

3. Générateur de force de freinage (10) selon la revendication 1 ou 2,
**caractérisé en ce que** le dispositif de détection de force d'actionnement de pédale (150) présente un capteur servant à détecter une déflexion momentanée de la pédale de frein (P), en particulier un capteur d'angle de rotation disposé sur un axe de rotation de la pédale de frein (P).

4. Générateur de force de freinage (10) selon l'une des revendications précédentes,
**caractérisé en ce que** la chambre de dépression (32, 38) est fluidiquement reliée à la section d'aspiration d'un moteur à combustion ou à une pompe à vide (156) pour produire une dépression.

5. Générateur de force de freinage (10) selon l'une des revendications précédentes,
**caractérisé en ce que** l'actionneur électromagnétique (48) présente une bobine (46) fixée au boîtier de soupape de commande (24) et un induit magnétique (50) pouvant être déplacé au moyen de la bobine (46) par rapport à celle-ci.

6. Générateur de force de freinage (10) selon l'une des revendications précédentes, en particulier selon la revendication 5,
**caractérisé en ce que** la soupape de commande (22) présente un boîtier de soupape de commande (24) pouvant se déplacer par rapport au dispositif boîtier (20) et un organe de soupape de commande (58) pouvant se déplacer par rapport au boîtier de soupape de commande (24), un siège d'étanchéité de boîtier (62) qui peut être amené en contact étanche avec l'organe de soupape de commande (58) étant prévu sur le boîtier de soupape de commande (24), une douille de soupape de commande (26) étant en outre accouplée à l'actionneur électromagnétique (48), en particulier à l'induit (50) de ce dernier, sur laquelle douille est prévu un siège d'étanchéité de douille (60) qui peut être amené en contact étanche avec l'organe de soupape de commande (58).

7. Générateur de force de freinage (10) selon la revendication 6,
**caractérisé en ce que** la chambre de travail est fluidiquement reliée à la chambre de dépression lorsque l'organe de soupape de commande (58) et le siège d'étanchéité de douille (60) sont en contact étanche et lorsque l'organe de soupape de commande (58) et le siège d'étanchéité de boîtier (62) sont simultanément séparés l'un de l'autre, et **en ce que** la chambre de travail (32, 38) est fluidiquement reliée à l'atmosphère environnante lorsque l'organe de soupape de commande (58) et le siège d'étanchéité de douille (60) sont en contact étanche et lorsque l'organe de soupape de commande (58) et le siège d'étanchéité de boîtier (62) sont simultanément séparés l'un de l'autre pour générer une différence de pression entre la chambre de travail (32, 38) et la chambre de dépression (30, 36).

8. Générateur de force de freinage (10) selon la revendication 5 et l'une des revendications précédentes,
**caractérisé en ce qu'**entre l'organe d'entrée de force (14) et une composante actionnant la soupape de commande (22), en particulier l'induit (50), il est prévu un jeu de sécurité (s) qui est surmonté lors du non-déplacement de l'induit (50) par la bobine (46) en dépit de l'actionnement de la pédale de frein, si bien que la composante actionnant la soupape de commande (22), en particulier l'induit (50), peut être accouplée en transmission de force à l'organe d'entrée de force (14), un autre déplacement de l'organe d'entrée de force (14) induit par un actionnement de la pédale de frein étant immédiatement transmis à la composante actionnant la soupape de commande (22), en particulier à l'induit (50) et par voie de conséquence au boîtier de soupape de commande (24).

9. Générateur de force de freinage (10) selon l'une des revendications précédentes,
**caractérisé en ce que** l'ensemble des chambres (16) est conçu sous forme d'un ensemble de chambres tandem comprenant un premier ensemble de chambres et un deuxième ensemble de chambres séparé de ce dernier, le premier ensemble de chambres présentant une première chambre de dépression (32) et une première chambre de travail (30) séparée de cette dernière par une première paroi mobile (28), le deuxième ensemble de chambres présentant une deuxième chambre de dépression (36) et une deuxième chambre de travail (38) séparée de cette dernière par une deuxième paroi mobile (40), le premier et le second ensemble de chambres pouvant être mis sous pression par le biais de la soupape de commande (22).

10. Générateur de force de freinage (10) selon la revendication 9,
**caractérisé en ce que** la première paroi mobile (28) et la deuxième paroi mobile (40) sont accouplées, de préférence de manière rigide, l'une à l'autre pour les besoins d'un mouvement conjoint.

11. Générateur de force de freinage (10) selon l'une des revendications précédentes,
**caractérisé en ce que** l'organe d'entrée de force (14) est accouplé par l'intermédiaire d'un ensemble de pistons de transmission (52, 56, 76) au dispositif de simulation de force antagoniste de pédale (106).

12. Générateur de force de freinage (10) selon l'une des revendications précédentes,
**caractérisé en ce que** l'ensemble d'amortisseurs présente un ressort de simulation (114) compressible par le biais d'un piston de force (110) pouvant être déplacé par le système hydraulique de force antagoniste de pédale (74, 80, 82, 108) ou/et des moyens d'amortissement fluidiques, de préférence un étranglement (126), ou/et une rondelle de butée (124) en caoutchouc élastique.

13. Générateur de force de freinage (10) selon l'une des revendications précédentes,
**caractérisé en ce que** le système hydraulique de force antagoniste de pédale est pourvu d'une soupape de séparation (82) qui peut être commandée et qui, dans une première position, de préférence dans sa position passive, désaccouple hydrauliquement l'ensemble d'amortisseurs et l'ensemble de pistons de transmission l'un de l'autre et autorise un mouvement pour l'essentiel non amorti de l'ensemble de pistons de transmission et qui, dans une seconde position, de préférence dans sa position active, accouple hydrauliquement l'ensemble d'amortisseurs et l'ensemble de pistons de transmission l'un à l'autre.

14. Générateur de force de freinage (10) selon la revendication 13,
**caractérisé en ce que** la soupape de séparation (82) est pourvue d'un organe d'étranglement (105), de préférence d'un obturateur précontraint par ressort, lequel, dans la position active de la soupape de séparation (82), réduit un courant de fluide hydraulique vers l'ensemble d'amortisseurs.

15. Générateur de force de freinage (10) selon la revendication 13 ou 14,
**caractérisé en ce que** la soupape de séparation (82) passe de sa position passive à sa position active, au début d'un actionnement de la pédale de frein, et la commande passe de sa position active à sa position passive seulement après qu'est achevé l'actionnement de la pédale de frein.

16. Générateur de force de freinage (10) selon l'une des revendications précédentes,
**caractérisé en ce que** le maître-cylindre de frein est réalisé dans le boîtier de cylindre (18), de préférence en tant qu'alésage de cylindre ouvert (66).

17. Générateur de force de freinage (10) selon la revendication 16,
**caractérisé en ce que** le boîtier de cylindre (18) peut, conjointement avec les composantes disposées à l'intérieur dudit boîtier, être introduit en tant qu'unité dans le dispositif boîtier (20) et peut être relié de manière amovible à celui-ci.

18. Générateur de force de freinage (10) selon l'une des revendications précédentes,
**caractérisé en ce qu'**un piston secondaire (130) est guidé déplaçable dans le maître-cylindre de frein, que le piston secondaire (130) avec le maître-cylindre englobe une chambre de pression secondaire (134) destinée à produire une pression de freinage hydraulique, et que le piston primaire (64) avec le maître-cylindre de frein et le piston secondaire (130) englobe la chambre de pression primaire (132) destinée à produire une pression de freinage hydraulique.

19. Générateur de force de freinage (10) selon la revendication 18,
**caractérisé en ce que** le piston primaire (64) et, le cas échéant, le piston secondaire (130) sont respectivement précontraints dans une position de sortie au moyen desdits ressorts de précontrainte (136, 138) associés.

20. Générateur de force de freinage (10) selon la revendication 11 et l'une des revendications précédentes,
**caractérisé en ce que** le piston primaire (64) est pourvu d'un alésage traversant dans lequel est guidé un piston d'actionnement (68), ce piston d'actionnement (68) présentant un alésage de cylindre d'actionnement (70) dans lequel un piston de séparation (72) est guidé et peut être déplacé au moyen du dispositif de pistons de transmission (52, 56), le piston de séparation (72) dans le piston d'actionnement (68) délimitant une chambre de fluide hydraulique (74) qui est accouplée fluidiquement au système hydraulique du dispositif de simulation de force antagoniste de pédale (106).

21. Générateur de force de freinage (10) selon la revendication 20,
**caractérisé en ce qu'**une composante (54) du dispositif de pistons de transmission, laquelle est en contact avec le piston de séparation (72), est accouplée de manière amovible par aimant ou/et par adhésif ou/et par encliquetage au piston de séparation (72).

22. Générateur de force de freinage (10) selon la revendication 20 ou 21,
**caractérisé en ce que** le piston d'actionnement (68) est fixe par rapport au boîtier de cylindre (18).

23. Générateur de force de freinage (10c) selon la revendication 20 ou 21,
**caractérisé en ce que** le piston d'actionnement (68c) peut se déplacer par rapport au boîtier de cylindre (18).

24. Générateur de force de freinage (10c) selon la revendication 23,
**caractérisé en ce que** le piston d'actionnement (68c) peut se déplacer par rapport au boîtier de cylindre (18) à l'encontre de l'effet d'un élément formant ressort (182c).

25. Générateur de force de freinage (10c) selon la revendication 24,
**caractérisé en ce que** l'accouplement du piston d'actionnement (68c) et de l'élément formant ressort (182c) est assuré par une tige de butée (75c) montée sur le piston d'actionnement (68c).

26. Générateur de force de freinage (10) selon l'une des revendications précédentes,
**caractérisé par** un dispositif de commande électronique (154) qui surveille le dispositif de détection d'actionnement de pédale (150) et commande l'actionneur électromagnétique (48) en fonction d'un signal de sortie du dispositif de détection d'actionnement de pédale (150), de préférence en tenant compte d'une ligne caractéristique prédéfinie ou d'un champ de lignes caractéristiques prédéfini.

27. Générateur de force de freinage (10) selon la revendication 26,
**caractérisé en ce que** le dispositif de commande électronique (154) est relié à l'actionneur électromagnétique (48) et commande celui-ci en fonction d'une pression hydraulique détectée dans le système hydraulique du dispositif de simulation de force antagoniste de pédale (106), par exemple à la soupape de séparation (82).

28. Générateur de force de freinage (10) selon la revendication 27,
**caractérisé en ce que** le dispositif de commande électronique (154) est relié à l'actionneur électromagnétique (48) et commande celui-ci en fonction d'un paramètre défini par le système de réglage du véhicule, par exemple en fonction de la distance par rapport au véhicule qui précède, de la pression hydraulique momentanée dans le système de freinage, du ralentissement momentané ou similaire.

29. Générateur de force de freinage (10) selon l'une des revendications 26 à 28,
**caractérisé en ce que** le dispositif de commande électronique (154) est relié à l'actionneur électromagnétique (48) et commande celui-ci en fonction d'une modification temporelle du signal de sortie du dispositif de détection d'actionnement de pédale (150) ou/et de la pression hydraulique détectée dans le système hydraulique du dispositif de simulation de force antagoniste de pédale (106), par exemple à la soupape de séparation (82).

30. Générateur de force de freinage (10) selon l'une des revendications 26 à 29,
**caractérisé en ce que** la ligne caractéristique ou le champ de lignes caractéristiques est prédéterminé de manière fixe ou peut être adapté à des paramètres de service détectés.

31. Générateur de force de freinage (10) selon l'une des revendications 26 à 30,
**caractérisé en ce que** le dispositif de commande électronique (154) est relié à la soupape de séparation (82) et commande celle-ci en fonction d'un signal de sortie du dispositif de détection d'actionnement de pédale (150).

32. Générateur de force de freinage (10) selon l'une des revendications 26 à 31,
**caractérisé en ce que** le dispositif de commande électronique (154) est relié à l'actionneur électromagnétique (48) et qu'un signal de sortie du capteur de position (140) est pris en compte lors de la commande de l'actionneur électromagnétique (48).

33. Système de freinage de véhicule équipé d'un générateur de force de freinage selon l'une des revendications précédentes.

34. Système de freinage selon la revendication 33,
**caractérisé en ce que** le véhicule à moteur est équipé d'un générateur utilisé pour le ralentissement et que le ralentissement du véhicule obtenu à l'activation du générateur est pris en compte lors de la commande du générateur de force de freinage.
